# EUROPEAN PATENT APPLICATION

(11) **EP 4 811 889 A1**
(43) Date of publication of application: **23.09.2026**
(21) Application number: 24896679.8
(22) Date of filing: 28.11.2024
(51) Int. Cl.: H04W 56/00, H04W 36/08

(54) **COMMUNICATION METHOD AND APPARATUS**

(30) Priority: 30.11.2023 CN 202311637510
(71) Applicant: Huawei Technologies Co., Ltd., Shenzhen, Guangdong 518129 (CN)
(72) Inventor: YOU, Chunhua, Shenzhen, Guangdong 518129 (CN); GU, Zhifang, Shenzhen, Guangdong 518129 (CN); FAN, Qiang, Shenzhen, Guangdong 518129 (CN)
(74) Representative: Thun, Clemens
(86) International application number: PCT/CN2024/135416
(87) International publication number: WO 2025/113594

(57) **Abstract**

This application relates to the field of communication technologies and discloses a communication method and apparatus. The method includes: A first network device receives a first message, where the first message includes first TA information of a first cell; determines that the first TA information corresponds to a first TAG among a plurality of TAGs, where the plurality of TAGs correspond to the first cell; and sends a second message to a terminal, where the second message includes identification information of a target cell for handover of the terminal, the first TA information, and identification information of the first TAG corresponding to the first TA information, and the target cell is the first cell. According to the foregoing method, after determining that the first TA information corresponds to the first TAG, the first network device sends the first TA information and the identification information of the first TAG to the terminal, so that the terminal may determine that the first TA information corresponds to the first TAG. This facilitates quick and effective data transmission of the terminal in the target cell. In this way, data transmission efficiency is improved.

## Description

### CROSS-REFERENCE TO RELATED APPLICATIONS

This application claims priority to Chinese Patent Application No. 202311637510.5, filed with the China National Intellectual Property Administration on November 30, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, multiple-input multiple-output (multiple-input multiple-output, MIMO) has been introduced to communication systems to improve throughputs. MIMO means that a plurality of transmit antennas and a plurality of receive antennas are respectively used at a transmitter and a receiver. In other words, there are a plurality of independent channels between the transmitter and the receiver. On this basis, multi-transmission and reception point (transmission and reception point, TRP)-based MIMO transmission is introduced in fifth generation (5th Generation, 5G) communication systems. A TRP may be understood as a physical transmission and reception point. Coverage of a cell may be jointly provided by a plurality of TRPs, to ensure full coverage.

However, with the introduction of the multi-TRP transmission technology, in cell handover scenarios, how to ensure terminals to quickly perform effective data transmission in a target cell still needs to be further studied.

### SUMMARY

This application provides a communication method and apparatus, to enable a terminal to obtain a correspondence between a TA and a TAG of a target cell in a cell handover scenario. This facilitates quick and effective data transmission of the terminal in the target cell. In this way, data transmission efficiency is improved.

According to a first aspect, an embodiment of this application provides a communication method. The method may be applied to a first network device or a module (for example, a chip or a circuit) in the first network device. An example in which the method is applied to the first network device is used. In the method, the first network device receives a first message, where the first message includes first timing advance TA information of a first cell; determines that the first TA information corresponds to a first timing advance group TAG among a plurality of TAGs, where the plurality of TAGs correspond to the first cell; and sends a second message to a terminal, where the second message includes identification information of a target cell for handover of the terminal, the first TA information, and identification information of the first TAG corresponding to the first TA information, and the target cell is the first cell.

According to the foregoing method, after determining that the first TA information corresponds to the first TAG, the first network device sends the first TA information and the identification information of the first TAG to the terminal, so that the terminal may determine that the first TA information corresponds to the first TAG. This facilitates quick and effective data transmission of the terminal in the target cell. In this way, data transmission efficiency is improved.

In a possible design, the first message further includes first information corresponding to the first TA information. The method further includes: receiving a third message, where the third message indicates that the first TAG corresponds to the first information. Determining that the first TA information corresponds to the first TAG among the plurality of TAGs includes: determining, based on the first message and the third message, that the first TA information corresponds to the first TAG.

In a possible design, determining, based on the first message and the third message, that the first TA information corresponds to the first TAG includes: determining, based on a correspondence between the first TA information and the first information and a correspondence between the first TAG and the first information, that the first TA information corresponds to the first TAG.

In a possible design, the first information indicates at least one of the following: a first TRP, a first SSB, and a first random access resource. The first TRP corresponds to the first cell.

In a possible design, the method further includes: sending first indication information, where the first indication information indicates that the terminal has obtained a TA corresponding to the first TAG.

In this way, the first indication information is sent, so that a second network device may determine, based on the first indication information, that the terminal has obtained the TA corresponding to the first TAG. This facilitates subsequent scheduling of the terminal to perform data transmission of the first TAG.

In a possible design, the first message further includes second TA information of the first cell. The method further includes: determining that the second TA information corresponds to a second TAG in the plurality of TAGs. The second message further includes the second TA information and identification information of the second TAG corresponding to the second TA information.

In this way, the first network device sends the second TA information and the identification information of the second TAG to the terminal, so that the terminal can obtain a TA corresponding to the second TAG. This facilitates subsequent quick data transmission of the second TAG.

In a possible design, the method further includes: sending second indication information, where the second indication information indicates that the terminal has obtained the TA corresponding to the second TAG.

According to a second aspect, an embodiment of this application provides a communication method. The method may be applied to a terminal or a module (for example, a chip or a circuit) in the terminal. An example in which the method is applied to the terminal is used. In the method, the terminal receives a second message, where the second message includes identification information of a target cell for handover of the terminal, first TA information, and identification information of a first TAG, the first TAG is one of a plurality of TAGs, and the plurality of TAGs correspond to the target cell; and determines, based on the second message, that the first TA information corresponds to the first TAG, and accesses the target cell by using a TA indicated by the first TA information.

In a possible design, the method further includes: when the second message is received, starting a timer corresponding to the first TAG, where uplink synchronization is implemented between the terminal and the target cell during running of the timer.

In a possible design, the method further includes: receiving downlink control information in the target cell, where the downlink control information indicates a resource, and the resource is an uplink resource or a downlink resource; and when the downlink control information or the resource indicated by the downlink control corresponds to the first TAG, determining that the handover is completed.

In a possible design, the method further includes: sending first indication information, where the first indication information indicates that the terminal has obtained the TA corresponding to the first TAG.

In a possible design, the second message further includes second TA information and identification information of a second TAG. The method further includes: determining, based on the second message, that the second TA information corresponds to the second TAG.

In a possible design, the method further includes: sending second indication information, where the second indication information indicates that the terminal has obtained a TA corresponding to the second TAG.

According to a third aspect, an embodiment of this application provides a communication method. The method may be applied to a second network device or a module (for example, a chip or a circuit) in the second network device. An example in which the method is applied to the second network device is used. In the method, the second network device sends a third message, where the third message indicates that a first TAG among a plurality of TAGs corresponds to first information, and the plurality of TAGs correspond to a first cell; sends a first message, where the first message includes first TA information and the first information corresponding to the first TA information, and the first message and the third message are used to determine that the first TA information corresponds to the first TAG; and determines that a terminal has obtained a TA corresponding to the first TAG.

In a possible design, the first information indicates at least one of the following: a first TRP, a first SSB, and a first random access resource. The first TRP corresponds to the first cell.

In a possible design, the method further includes: receiving request information, where the request information is used to request random access configurations corresponding to the plurality of TAGs.

In a possible design, determining that the terminal has obtained the TA corresponding to the first TAG includes: receiving first indication information, where the first indication information indicates that the terminal has obtained the TA corresponding to the first TAG.

In a possible design, the third message further indicates that a second TAG in the plurality of TAGs corresponds to second information, the first message further includes second TA information and the second information corresponding to the second TA information, and the first message and the third message are further used to determine that the second TA information corresponds to the second TAG. The method further includes: receiving second indication information, where the second indication information indicates that the terminal has obtained a TA corresponding to the second TAG.

It may be understood that the communication method according to the second aspect or the third aspect corresponds to that according to the first aspect. For beneficial effects of related technical features in the second aspect or the third aspect, refer to descriptions in the first aspect. Details are not described again.

According to a fourth aspect, an embodiment of this application provides a communication method. The method may be applied to a terminal or a module (for example, a chip or a circuit) in the terminal. An example in which the method is applied to the terminal is used. In the method, the terminal receives a fourth message, where the fourth message indicates that random access corresponds to a first TAG, the first TAG is one of a plurality of TAGs, and the plurality of TAGs correspond to a first cell; obtains first TA information based on the random access; and determines, based on the fourth message, that the first TA information corresponds to the first TAG.

According to the foregoing method, a second network device indicates, to the terminal, that the random access corresponds to the first TAG, so that after obtaining the first TA information based on the random access, the terminal may determine that the first TA information corresponds to the first TAG. This facilitates quick and effective data transmission of the terminal in a target cell. In this way, data transmission efficiency is improved.

In a possible design, obtaining the first TA based on the random access includes: receiving a second message, where the second message includes identification information of the target cell for handover of the terminal and the first TA information, and the target cell is the first cell. The method further includes: when the second message is received, starting a timer corresponding to the first TAG, where uplink synchronization is implemented between the terminal and the target cell during running of the timer.

In a possible design, the method further includes: accessing, by using a TA indicated by the first TA information, the target cell for handover, where the target cell is the first cell; receiving downlink control information in the first cell, where the downlink control information indicates a resource, and the resource is an uplink resource or a downlink resource; and when the downlink control information or the resource indicated by the downlink control information corresponds to the first TAG, determining that the handover is completed.

In a possible design, the method further includes: sending first indication information, where the first indication information indicates that the terminal has obtained the TA corresponding to the first TAG.

According to a fifth aspect, an embodiment of this application provides a communication method. The method may be applied to a second network device or a module (for example, a chip or a circuit) in the second network device. An example in which the method is applied to the second network device is used. In the method, the second network device sends a fourth message, where the fourth message indicates that random access corresponds to a first TAG, the first TAG is one of a plurality of TAGs, and the plurality of TAGs correspond to a first cell; and determines that a terminal has obtained, based on the random access, a TA corresponding to the first TAG.

In a possible design, determining that the terminal has obtained, based on the random access, the TA corresponding to the first TAG includes: receiving first indication information, where the first indication information indicates that the terminal has obtained the TA corresponding to the first TAG.

In a possible design, the method further includes: receiving request information, where the request information is used to request random access configurations corresponding to the plurality of TAGs.

It may be understood that the communication method according to the fifth aspect corresponds to that according to the fourth aspect. For beneficial effects of related technical features in the fifth aspect, refer to descriptions in the fourth aspect. Details are not described again.

According to a sixth aspect, an embodiment of this application provides a communication method. The method may be applied to a terminal or a module (for example, a chip or a circuit) in the terminal. An example in which the method is applied to the terminal is used. In the method, the terminal receives a fifth message, where the fifth message indicates that first TA measurement corresponds to a first TAG, the first TAG is one of a plurality of TAGs, and the plurality of TAGs correspond to a first cell; obtains a first TA based on the first TA measurement; and determines, based on the fifth message, that the first TA corresponds to the first TAG.

According to the foregoing method, a second network device indicates, to the terminal, that the first TA measurement corresponds to the first TAG, so that after obtaining the first TA information based on the first TA measurement, the terminal may determine that the first TA information corresponds to the first TAG. This facilitates quick and effective data transmission of the terminal in a target cell. In this way, data transmission efficiency is improved.

In a possible design, the method further includes: receiving a second message, where the second message includes identification information of the target cell for handover of the terminal, and the target cell is the first cell; and when the second message is received and the first TA is obtained based on the first TA measurement, starting a timer corresponding to the first TAG, where uplink synchronization is implemented between the terminal and the target cell during running of the timer.

In a possible design, the method further includes: accessing, by using the first TA, the target cell for the handover, where the target cell is the first cell; receiving downlink control information in the first cell, where the downlink control information indicates a resource, and the resource is an uplink resource or a downlink resource; and when the downlink control information or the resource indicated by the downlink control information corresponds to the first TAG, determining that the handover is completed.

In a possible design, that the first TA measurement corresponds to the first TAG includes: a first reference signal of the first cell corresponds to the first TAG, where the first reference signal is used for the first TA measurement.

In a possible design, the method further includes: sending first indication information, where the first indication information indicates that the terminal has obtained a TA corresponding to the first TAG.

In a possible design, a fourth message further indicates that second TA measurement corresponds to a second TAG, and the second TAG is one of the plurality of TAGs; a second TA is obtained based on the second TA measurement; and that the second TA corresponds to the second TAG is determined based on the fourth message.

In a possible design, the method further includes: sending second indication information, where the second indication information indicates that the terminal has obtained a TA corresponding to the second TAG.

In a possible design, that the second TA measurement corresponds to the second TAG includes: a second reference signal of the first cell corresponds to the second TAG, where the second reference signal is used for the second TA measurement.

In a possible design, the fifth message further indicates a measurement identifier corresponding to the first reference signal. Obtaining the first TA based on the first TA measurement includes: receiving a measurement identifier corresponding to a third reference signal of a second cell; and when the measurement identifier corresponding to the first reference signal is the same as the measurement identifier corresponding to the third reference signal, determining the first TA based on the first reference signal, the third reference signal, and a TA of the second cell.

According to a seventh aspect, an embodiment of this application provides a communication method. The method may be applied to a second network device or a module (for example, a chip or a circuit) in the second network device. An example in which the method is applied to the second network device is used. In the method, the second network device sends a fifth message, where the fifth message indicates that first TA measurement corresponds to a first TAG, the first TAG is one of a plurality of TAGs, and the plurality of TAGs correspond to a first cell; and determines that a terminal has obtained, based on the first TA measurement, a TA corresponding to the first TAG.

In a possible design, determining that the terminal has obtained, based on the first TA measurement, the TA corresponding to the first TAG includes: receiving first indication information, where the first indication information indicates that the terminal has obtained the TA corresponding to the first TAG.

In a possible design, the method further includes: receiving request information, where the request information is used to request TA measurement configurations corresponding to the plurality of TAGs.

In a possible design, that the first TA measurement corresponds to the first TAG includes: a first reference signal of the first cell corresponds to the first TAG, where the first reference signal is used for the first TA measurement.

In a possible design, a fourth message further indicates that second TA measurement corresponds to a second TAG, and the second TAG is one of the plurality of TAGs.

In a possible design, the method further includes: receiving second indication information, where the second indication information indicates that the terminal has obtained a TA corresponding to the second TAG.

In a possible design, that the second TA measurement corresponds to the second TAG includes: a second reference signal of the first cell corresponds to the second TAG, where the second reference signal is used for the second TA measurement.

It may be understood that the communication method according to the seventh aspect corresponds to that according to the sixth aspect. For beneficial effects of related technical features in the seventh aspect, refer to descriptions in the sixth aspect. Details are not described again.

According to an eighth aspect, this application provides a communication apparatus. The communication apparatus can implement a function in any one of the first aspect to the seventh aspect. For example, the communication apparatus includes a corresponding module, unit, or means for performing operations in any one of the first aspect to the seventh aspect. The function, the unit, or the means may be implemented by software, hardware, or hardware executing corresponding software.

In a possible design, the communication apparatus includes a processing unit and a communication unit. The communication unit may be configured to receive and send signals, to implement communication between the communication apparatus and another apparatus. The processing unit may be configured to perform some internal operations of the communication apparatus. Functions performed by the processing unit and the communication unit may correspond to the operations in any one of the first aspect to the seventh aspect.

In a possible design, the communication apparatus includes a processor, and the processor may be configured to be coupled to a memory. The memory may store a computer program or instructions necessary for implementing a function in any one of the first aspect to the seventh aspect. The processor may execute the computer program or the instructions stored in the memory. When the computer program or the instructions are executed, the communication apparatus is enabled to implement the method according to any one of the possible designs or implementations of the first aspect to the seventh aspect.

In a possible design, the communication apparatus includes a processor and a memory, and the memory may store a computer program or instructions necessary for implementing a function in any one of the first aspect to the seventh aspect. The processor may execute the computer program or the instructions stored in the memory. When the computer program or the instructions are executed, the communication apparatus is enabled to implement the method according to any one of the possible designs or implementations of the first aspect to the seventh aspect.

In a possible design, the communication apparatus includes a processor and an interface circuit. The processor is configured to: communicate with another apparatus through the interface circuit, and perform the method according to any one of the possible designs or implementations of the first aspect to the seventh aspect.

It may be understood that in the eighth aspect, the processor may be implemented by hardware or software. When being implemented by the hardware, the processor may be a logic circuit, an integrated circuit, or the like. When being implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a ninth aspect, this application provides a communication system. The communication system may include a first network device, a second network device, and a terminal. The first network device is configured to perform the method according to the first aspect, the second network device is configured to perform the method according to the third aspect, and the terminal is configured to perform the method according to the second aspect.

Alternatively, the communication system may include a second network device and a terminal. The second network device is configured to perform the method according to the fifth aspect, and the terminal is configured to perform the method according to the fourth aspect.

Alternatively, the communication system may include a second network device and a terminal. The second network device is configured to perform the method according to the seventh aspect, and the terminal is configured to perform the method according to the sixth aspect.

According to a tenth aspect, this application provides a computer-readable storage medium. The computer storage medium stores computer-readable instructions. When a computer reads and executes the computer-readable instructions, the computer is enabled to perform the method according to any one of the possible designs of the first aspect to the seventh aspect.

For example, the computer-readable storage medium may be any usable medium that can be accessed by the computer. By way of example and not limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disc storage, a magnetic disk storage medium or another magnetic storage device, or any other medium that can be configured to carry or store desired program code in a form of instructions or a data structure and that is accessible to the computer.

According to an eleventh aspect, this application provides a computer program product. When a computer reads and executes the computer program product, the computer is enabled to perform the method according to any one of the possible designs of the first aspect to the seventh aspect.

According to a twelfth aspect, this application provides a chip (or a chip system). The chip includes a processor, and the processor is coupled to a memory, and is configured to read and execute a software program stored in the memory, to implement the method according to any one of the possible designs of the first aspect to the seventh aspect.

### BRIEF DESCRIPTION OF DRAWINGS

FIG. 1 is a diagram of a communication system to which an embodiment of this application is applicable;
FIG. 2A is a diagram of a CU-DU split architecture according to an embodiment of this application;
FIG. 2B is a diagram of another CU-DU split architecture according to an embodiment of this application;
FIG. 3A is a diagram of a downlink timing difference according to an embodiment of this application;
FIG. 3B is a diagram of a timing advance according to an embodiment of this application;
FIG. 4A is a diagram of a multi-TRP transmission technology according to an embodiment of this application;
FIG. 4B is another diagram of a multi-TRP transmission technology according to an embodiment of this application;
FIG. 5 is a schematic flowchart corresponding to a communication method according to Embodiment 1 of this application;
FIG. 6 is a schematic flowchart corresponding to a communication method according to Embodiment 2 of this application;
FIG. 7 is a schematic flowchart corresponding to a communication method according to Embodiment 3 of this application;
FIG. 8 is a schematic flowchart corresponding to a communication method according to Embodiment 4 of this application;
FIG. 9 is a schematic flowchart corresponding to a communication method according to Embodiment 5 of this application;
FIG. 10 is a schematic flowchart corresponding to a communication method according to Embodiment 6 of this application;
FIG. 11 is a block diagram of a possible example of an apparatus according to an embodiment of this application;
FIG. 12 is a diagram of a structure of a network device according to an embodiment of this application; and
FIG. 13 is a diagram of a structure of a terminal according to an embodiment of this application.

### DESCRIPTION OF EMBODIMENTS

The following describes the technical solutions in embodiments of this application with reference to accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system, for example, a long term evolution (long term evolution, LTE) system, a 5th generation (5th generation, 5G) mobile communication system, for example, a new radio (new radio, NR) system, and a future evolved communication system, for example, a 6th generation (6th generation, 6G) mobile communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like described with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner. In embodiments of this application, "of (of)", "corresponding, relevant (corresponding, relevant)", and "corresponding (corresponding)" may be interchangeably used sometimes. It should be noted that meanings expressed by the terms are consistent when differences of the terms are not emphasized.

A communication system and a service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and emergence of new service scenarios, the technical solutions provided in embodiments of this application are also applicable to similar technical problems.

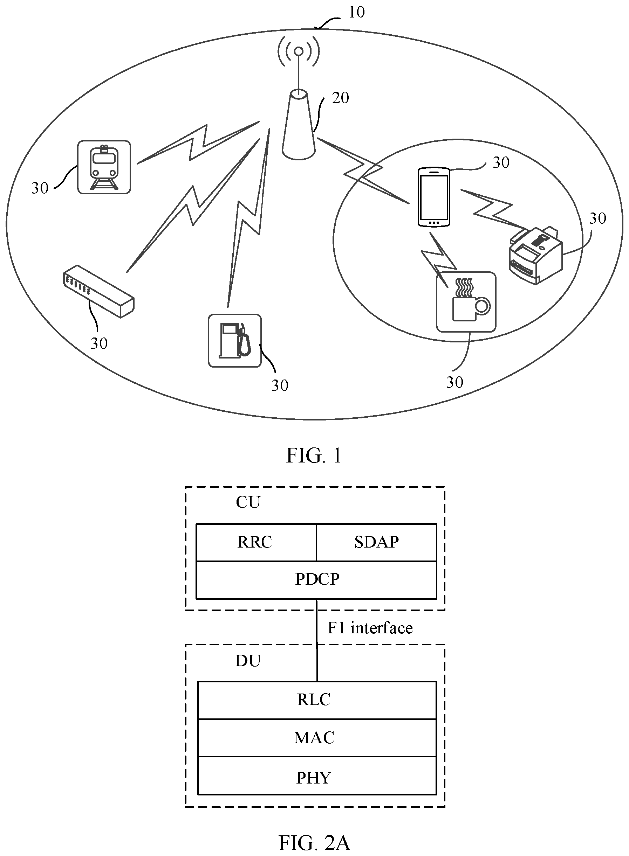

For ease of understanding embodiments of this application, a communication system shown in FIG. 1 is first used as an example to describe in detail a communication system applicable to embodiments of this application. As shown in FIG. 1, a communication system 10 includes one or more access network devices 20 and one or more terminals 30. An interface between the access network device and the terminal may be a Uu interface (or referred to as an air interface), and data transmission may be performed between the access network device 20 and the terminal 30 by using an air interface resource. For example, the terminal may be located in communication coverage of one or more cells of the access network device, and there may be one or more cells that provide a service for the terminal (that is, serving cells of the terminal). When there are a plurality of serving cells of the terminal, the terminal may operate in a carrier aggregation (carrier aggregation, CA) manner.

### (1) Terminal

The terminal may be a terminal that accesses the foregoing communication system and that has a wireless transceiver function, or may be a chip or a chip system that may be disposed in the terminal. The terminal may also be referred to as user equipment (user equipment, UE), a terminal device, a user apparatus, an access terminal, a subscriber unit, a subscriber station, a mobile station (mobile station, MS), a remote station, a remote terminal, a mobile device, a user terminal, a terminal unit, a terminal station, a terminal apparatus, a wireless communication device, a user agent, or a user apparatus.

For example, the terminal in embodiments of this application may be a mobile phone (mobile phone), a personal digital assistant (personal digital assistant, PDA) computer, a laptop computer (laptop computer), a pad (Pad), an uncrewed aerial vehicle, a computer that has a wireless transceiver function, a machine type communication (machine type communication, MTC) terminal, a virtual reality (virtual reality, VR) terminal, an augmented reality (augmented reality, AR) terminal, an internet of things (internet of things, IoT) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal (for example, a game console, a smart television, a smart speaker, a smart refrigerator, or fitness equipment) in a smart home (smart home), a vehicle-mounted terminal, or an RSU that has a terminal function.

### (2) Access network device

The access network device is a device that is located on a network side of the foregoing communication system and that has a wireless transceiver function, or may be a chip or a chip system that may be disposed in the device.

For example, the access network device in embodiments of this application may be an access point (access point, AP) like a home gateway, a router, a server, a switch, or a bridge in a Wi-Fi system, a base station, an evolved NodeB (evolved NodeB, eNB), a radio network controller (radio network controller, RNC), a base station controller (base station controller, BSC), a base transceiver station (base transceiver station, BTS), a home base station, a baseband unit (baseband unit, BBU), a wireless relay node, a wireless backhaul node, a transmission point (transmission and reception point, TRP; or transmission point, TP), or the like, or may be a next-generation NodeB (next generation NodeB, gNB) in a 5G system, or a network node that forms a gNB, for example, a central unit (central unit, CU), a distributed unit (distributed unit, DU), or a roadside unit (road side unit, RSU) that has a base station function, or may be a satellite or a base station in various forms in the future.

### (3) Communication between a terminal and an access network device

Communication between the terminal and the access network device is performed in accordance with a specific protocol layer structure. For example, a control plane protocol layer structure may include a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer (physical layer, PHY). A user plane protocol layer structure may include a PDCP layer, an RLC layer, a MAC layer, and a physical layer. In a possible implementation, a service data adaptation protocol (service data adaptation protocol, SDAP) layer may be further included above the PDCP layer. The SDAP layer, the PDCP layer, the RLC layer, the MAC layer, and the physical layer may be collectively referred to as an access stratum. For detailed descriptions of the foregoing protocol layers, refer to related technical specifications of the 3rd generation partnership project (3rd generation partnership project, 3GPP).

Downlink data transmission is used as an example. Downlink data may be correspondingly encapsulated at each layer of the access network device. Data received by a specific layer from an upper layer of the layer is considered as a service data unit (service data unit, SDU) of the layer, and becomes a protocol data unit (protocol data unit, PDU) through layer encapsulation to be transmitted to a next layer. For example, data received by a PDCP layer entity from the SDAP layer may be referred to as a PDCP SDU. After encapsulating the PDCP SDU, the PDCP layer entity obtains a PDCP PDU and sends the PDCP PDU to the RLC layer. The PDCP PDU received by an RLC layer entity from the PDCP layer may be referred to as an RLC SDU. After encapsulating the RLC SDU, the RLC layer entity obtains an RLC PDU and sends the RLC PDU to the MAC layer.

From a perspective of the terminal, after a physical layer of the terminal receives a transport block from the access network device, the transport block may be sequentially submitted from the physical layer to upper layers, and may be correspondingly decapsulated at each layer. In other words, processing performed at each layer of the terminal may be an inverse process of processing performed at each layer of the access network device.

### (4) CU-DU split architecture

For example, in some possible network structures, an access network device may include one or more central units (central units, CUs) and one or more distributed units (distributed units, DUs), and a plurality of DUs may be centrally controlled by one CU. This architecture may be referred to as the CU-DU split architecture. For example, an interface between the CU and the DU may be referred to as an F1 interface. A control plane (control panel, CP) interface may be an F1-C interface, and a user plane (user panel, UP) interface may be an F1-U interface.

Processing functions of the CU and the DU may be divided based on protocol layers of a wireless network. For example, as shown in FIG. 2A, functions of a PDCP layer and protocol layers above the PDCP layer are set on the CU, and functions of protocol layers (for example, an RLC layer and a MAC layer) below the PDCP layer are set on the DU. It may be understood that division of the processing functions of the CU and the DU based on the protocol layers is merely an example, and division may alternatively be performed in another manner. For example, functions of protocol layers above the RLC layer are set on the CU, and functions of the RLC layer and protocol layers below the RLC layer are set on the DU. For another example, division may be performed in a manner in which the CU or the DU has functions of more protocol layers. For another example, division may be performed in a manner in which the CU or the DU has some processing functions of the protocol layers. This is not limited in embodiments of this application.

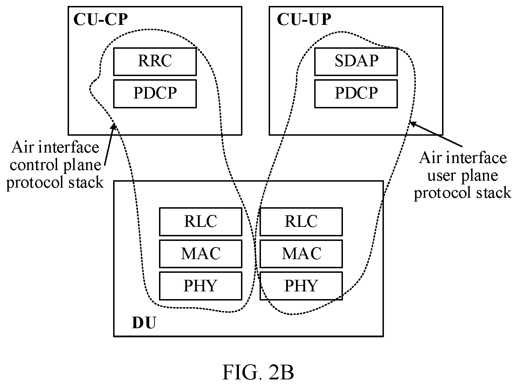

Further, a function of the CU may be implemented by one entity, or may be implemented by different entities. For example, the function of the CU may be further divided. In other words, a control plane and a user plane are separated and implemented by different entities: a control plane CU entity (that is, a CU-CP entity) and a user plane CU entity (that is, a CU-UP entity). The CU-CP entity and the CU-UP entity may be coupled to the DU, to jointly complete a function of a RAN device. An interface between the CU-CP entity and the CU-UP entity may be an E1 interface, an interface between the CU-CP entity and the DU may be an F1-C interface, and an interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs. Under coordination of a plurality of CU-CPs, one CU-UP may alternatively be connected to a plurality of coordinated CU-CPs. In this way, flexibility of the CU-CP is improved. FIG. 2B is a diagram of air interface protocol stack distribution. As shown in FIG. 2B, for both a user plane and a control plane, an air interface protocol stack may be that RLC, MAC, and PHY are on a DU, and PDCP and upper protocol layers are on a CU.

It should be noted that in the architectures shown in FIG. 2A and FIG. 2B, signaling generated by the CU may be sent to a terminal via the DU, or signaling generated by a terminal may be sent to the CU via the DU. The DU may perform transparent transmission of the signaling to the terminal or the CU by directly encapsulating the signaling at a protocol layer without parsing the signaling. In the following embodiments, if transmission of such signaling between the DU and the terminal is performed, sending or receiving of the signaling by the DU includes such a scenario. For example, signaling at an RRC layer or the PDCP layer is finally processed to be physical layer data and is sent to the terminal, or is converted from received physical layer data. In this architecture, the signaling at the RRC layer or the PDCP layer may also be considered as being sent by the DU, or sent by the DU and a radio frequency apparatus.

It may be understood that a quantity of access network devices and a quantity of terminals included in the communication system are not limited in embodiments of this application. Moreover, in addition to the access network device and the terminal, the communication system may further include another device or network element, for example, a core network device or a relay device. This is not limited in embodiments of this application.

The following first explains and describes related terms in embodiments of this application. It should be noted that these explanations are intended to make embodiments of this application easier to understand, but should not be considered as a limitation on the protection scope claimed in this application.

### (1) Cell handover

Cell handover may be classified into two types. One is cell handover implemented based on a layer 1/layer 2. This may be referred to as layer 1/layer 2 handover or layer 1/layer 2 triggered mobility (L1/L2 triggered mobility, LTM). The other is cell handover implemented based on a layer 3. This may be referred to as layer 3 handover (L3 handover). The layer 1 may be a physical layer, the layer 2 may be any one or more of a MAC layer, an RLC layer, a PDCP layer, and an SDAP layer, and the layer 3 may be an RRC layer. Because the layer 1 and the layer 2 are lower than the RRC layer (the layer 3) in a protocol stack, the layer 1/layer 2 handover may also be referred to as low-layer handover, bottom-layer handover, or lower-layer handover. A name of a specific handover technology is not limited in this application.

For the layer 3 handover, in a CU-DU split architecture, a CU receives a measurement result (the measurement result is forwarded by a DU to the CU) of a terminal, determines, based on the measurement result, whether to initiate handover, and if the handover is determined to be initiated, sends a switch command to the DU, and the DU sends the switch command to the terminal. This process involves communication interaction between the CU and the DU (that is, interaction through an F1 interface), and a maximum transmission delay of the F1 interface is approximately 3 ms to 10 ms. In this case, a specific handover delay is caused.

However, a layer 1/layer 2 handover decision is delivered from the CU to the DU. In other words, the DU determines, based on the measurement result of the terminal, whether to initiate switching (LTM cell switch), and directly sends a switch command message to the terminal, so that F1 interaction can be effectively reduced, and the handover delay can be reduced.

### (2) Cell handover scenario

When a terminal is handed over between different cells, there may be a plurality of specific handover scenarios. For example, the handover scenarios may be classified based on a location relationship between a source cell and a target cell.

When an access network device uses a CU-DU split architecture (for example, the access network device includes one CU and a plurality of DUs, the plurality of DUs are centrally controlled by one CU, and each of the plurality of DUs may include one or more cells), the location relationship between the source cell and the target cell may be whether the source cell and the target cell belong to a same CU and/or a same DU. That "the DU includes one or more cells" may also be described as that "the DU manages or controls one or more cells", "one or more cells of the DU", or that "one or more cells belong to the DU". Three possible handover scenarios, namely, Scenario 1 to Scenario 3, are described herein.

Scenario 1: The terminal is handed over from a cell of the DU to another cell of the DU. In other words, the source cell and the target cell of the terminal belong to the same DU. Cell handover corresponding to Scenario 1 is intra-DU (intra-DU) handover.

Scenario 2: The terminal is handed over from a cell of a DU 1 controlled by the CU to a cell of a DU 2 controlled by the CU. In this case, the DU 1 may be referred to as a source DU, and the DU 2 may be referred to as a target DU. In other words, the source cell and the target cell of the terminal belong to different DUs controlled by the same CU. Cell handover corresponding to Scenario 2 is inter-DU (inter-DU) handover.

Scenario 3: The terminal is handed over from a cell of a DU 1 controlled by a CU 1 to a cell of a DU 3 controlled by a CU 2. In this case, the CU 1 may be referred to as a source CU, and the CU 2 may be referred to as a target CU. In other words, the source cell and the target cell of the terminal belong to different DUs controlled by different CUs. Cell handover corresponding to Scenario 2 is inter-CU (inter-CU) handover.

When the access network device is considered as a whole (for example, a gNB), the location relationship between the source cell and the target cell may be whether the source cell and the target cell belong to a same access network device. Two possible handover scenarios, namely, Scenario 4 and Scenario 5, are described herein.

Scenario 4: The terminal is handed over from a cell of an access network device 1 to a cell of an access network device 2. In this case, the access network device 1 may be referred to as a source access network device, and the access network device 2 may be referred to as a target access network device. In other words, the source cell and the target cell of the terminal belong to different access network devices. Cell handover corresponding to Scenario 4 is inter-gNB (inter-gNB) handover.

Scenario 5: The terminal is handed over from a cell of the access network device to another cell of the access network device. In other words, the source cell and the target cell of the terminal belong to the same access network device. Cell handover corresponding to Scenario 5 is intra-gNB (intra-gNB) handover.

The communication method provided in embodiments of this application is applicable to any one of the foregoing scenarios.

### (3) Downlink synchronization

Downlink timing is used for downlink synchronization between a terminal and an access network device. The downlink timing may be a cell-level parameter, and each cell has corresponding downlink timing. The downlink timing is defined as time at which a first path (in terms of time) of a corresponding downlink frame used by the terminal to determine the downlink timing is received from a reference cell at an antenna of the UE. For details, refer to an existing protocol.

A 5G communication system is used as an example. A slot may be used as a basic time unit for uplink and downlink transmission. In other words, data transmission is performed once in each slot. A slot start moment of the access network device is fixed, and uplink and downlink slots are aligned. For downlink transmission, when a downlink signal sent by the access network device arrives at a terminal side through air propagation, there is a propagation delay. For example, a signal propagation delay between a DU 1 to which a cell A belongs and the terminal is Tp1, and a signal propagation delay between a DU 2 to which a cell B belongs and the terminal is Tp2. Therefore, the cell A is used as an example. The terminal may determine downlink timing of the cell A by receiving a reference signal of the cell A.

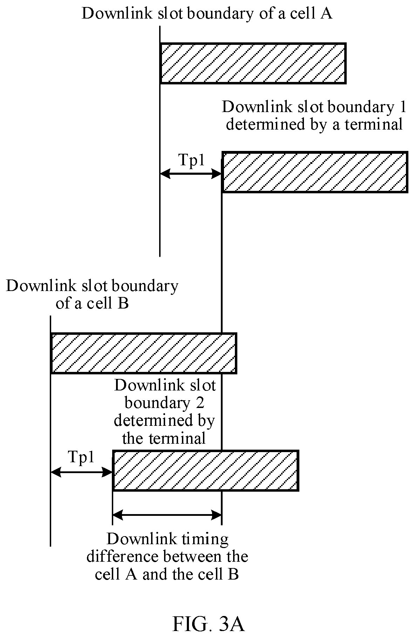

A downlink timing difference in the following is explained herein: As shown in FIG. 3A, a downlink reference signal 1 sent by a DU 1 at a downlink slot boundary of a cell A arrives at a terminal after Tp1, and the terminal determines a downlink slot boundary 1 based on the received downlink reference signal 1. There is a time difference of Tp1 between the downlink slot boundary of the cell A and the downlink slot boundary 1 determined by the terminal. A downlink reference signal 2 sent by a DU 2 at a downlink slot boundary of a cell B arrives at the terminal after Tp2, and the terminal determines a downlink slot boundary 2 based on the received downlink reference signal 2. There is a time difference of Tp2 between the downlink slot boundary of the cell B and the downlink slot boundary 2 determined by the terminal. In this case, a time difference between a downlink slot boundary (for example, the downlink slot boundary 1) determined by the terminal for the cell A and a downlink slot boundary (for example, the downlink slot boundary 2) determined by the terminal for the cell B is a downlink timing difference between the cell A and the cell B. It may be understood that the downlink slot boundary may alternatively be replaced with a downlink frame boundary.

### (4) Uplink synchronization

A timing advance (timing advance, TA) is used for uplink synchronization between a terminal and an access network device. If the terminal obtains a TA of a cell A, it indicates that the uplink synchronization is implemented between the terminal and the cell A. After obtaining the TA of the cell A, the terminal may use the TA of the cell A to send uplink data to a DU to which the cell A belongs.

For cell handover, the terminal may obtain a TA of a target cell by sending a random access preamble. The following describes two possible manners, namely, Manner 1 and Manner 2.

### Manner 1: Random access-based manner

Before performing cell handover (or before receiving a switch command), the terminal may send, in one or more candidate cells, the random access preamble to a candidate DU. For example, the one or more candidate cells include the cell A. The terminal may send, in the cell A, the random access preamble to a DU 1 to which the cell A belongs. Then, the DU 1 may obtain the TA of the cell A through measurement, and send the TA of the cell A to a target DU (for example, a DU 2) of the terminal. Subsequently, if the DU 2 determines to hand over the terminal to the cell A, the DU 2 may send the TA of the cell A to the terminal by using a switch command. Then, the terminal may obtain the TA of the cell A, and perform communication based on the TA of the cell A after the terminal is handed over to the cell A.

### Manner 2: TA measurement-based manner or manner based on downlink reference signal measurement by the terminal

The terminal may determine downlink timing of the cell A by measuring a downlink reference signal of the cell A, and determine downlink timing of a cell B by measuring a downlink reference signal of the cell B. Then, the terminal may determine a TA of the cell A or the cell B based on a downlink timing difference between the cell A and the cell B.

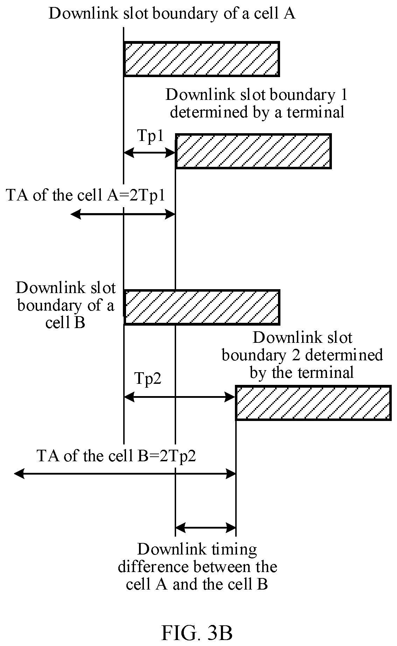

An example in which the target cell is the cell A is used. If downlink slot boundaries of the cell A and the cell B (the cell B may be a source cell of the terminal) are synchronous, as shown in FIG. 3B, the TA of the cell A may be determined based on the downlink timing difference according to Formula 1: $TA _ targetcell = TA _ sourcecell + 2 * \left(Tnew-Told\right)$

*TA_targetcell* represents the TA of the cell A, *TA_sourcecell* represents the TA of the cell B, *Tnew-Told* is the downlink timing difference between the cell A and the cell B, *Tnew* is the downlink timing of the cell A, and *Told* is the downlink timing of the cell B.

Formula 1 may alternatively be changed to: $TA _ targetcell = TA _ sourcecell - 2 * \left(Told-Tnew\right)$

If downlink slot boundaries of the cell A and the cell B (the cell B may be a source cell of the terminal) are asynchronous, the TA of the cell A may be determined based on the downlink timing difference according to Formula 2: $TA _ targetcell = TA _ sourcecell + 2 * \left(Tnew-Told\right) + offset$ *offset* represents an offset between the downlink slot boundaries of the cell A and the cell B.

In addition, whether the downlink slot boundaries of the cell A and the cell B are synchronous and the offset between the downlink slot boundaries of the cell A and the cell B may be indicated by the access network device to the terminal. A specific implementation is not limited.

### (5) Multi-TRP transmission technology

The multi-TRP transmission technology means that a plurality of TRPs provide services for a same terminal, to improve data transmission efficiency of the terminal. The plurality of TRPs may belong to a same cell of a same base station. Each of the plurality of TRPs has a corresponding data channel, and the terminal may perform data transmission in a same cell through data channels of different TRPs. The data channel may include a physical uplink shared channel (physical uplink shared channel, PUSCH) and/or a physical downlink shared channel (Physical downlink shared channel, PDSCH).

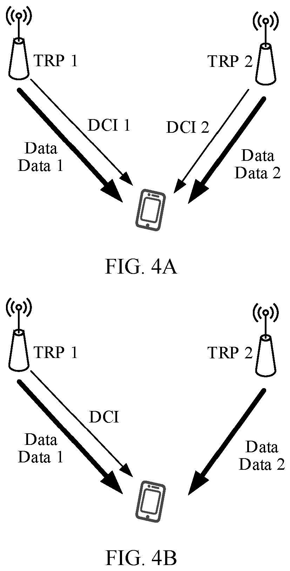

FIG. 4A and FIG. 4B show examples of two possible implementations of the multi-TRP transmission technology. A manner shown in FIG. 4A is a multi-downlink control information (downlink control information, DCI)-based manner, and DCI is carried on a physical downlink control channel (physical downlink control channel, PDCCH). In other words, two TRPs separately transmit one piece of DCI, and each piece of DCI is used to schedule one PUSCH or PDSCH. A manner shown in FIG. 4B is a single-DCI-based manner. In other words, only one TRP in two TRPs transmits DCI, and the DCI may be used to schedule one PUSCH or PDSCH. An example in which the DCI is used to schedule one PDSCH is used. A part of streams/layers (corresponding to a part of demodulation reference signal (demodulation reference signal, DMRS) ports) in the PDSCH are transmitted by one TRP, and the other part of streams/layers (corresponding to a part of DMRS ports) are transmitted by the other TRP.

After a multi-TRP transmission technology is introduced, before performing data transmission in a cell, a terminal needs to perform synchronization (for example, uplink synchronization) with a TRP in the cell. Because different TRPs in a same cell are usually deployed at different locations, the different TRPs correspond to different TAs. In other words, the terminal needs to send data to the different TRPs by using the different TAs.

In a cell handover scenario, it is assumed that a target cell for handover includes a TRP 1 and a TRP 2. After the terminal obtains a TA of the target cell in the "random access-based manner" or the "manner based on downlink reference signal measurement by the terminal" described above, because the terminal does not know whether the TA of the target cell is for the TRP 1 or the TRP 2, data transmission of the terminal in the target cell may fail (for example, if the TA that is of the target cell and that is obtained by the terminal is a TA for the TRP 1, but the terminal sends data to the TRP 2 by using the TA, data transmission fails), that is, effective data transmission cannot be performed. In this case, data transmission efficiency is affected.

Based on this, in embodiments of this application, related implementations of the multi-TRP transmission technology in the cell handover scenario are studied. For example, embodiments of this application provide a communication method, to enable a terminal to obtain a correspondence between a TA and a TAG of a target cell in a cell handover scenario. This facilitates quick and effective data transmission of the terminal in the target cell. In this way, data transmission efficiency is improved.

The communication method provided in embodiments of this application relates to at least one network device and the terminal. The following describes the network device in embodiments of this application with reference to some handover scenarios described above.
(1) In the intra-DU handover (Scenario 1), the network device in embodiments of this application includes a CU and a DU managed by the CU, and both a source cell and a candidate cell of the terminal belong to the DU.
(2) In the inter-DU handover (Scenario 2), the network device in embodiments of this application includes a CU, a first DU managed by the CU (that is, a source DU of the terminal), and a second DU managed by the CU (that is, a candidate DU of the terminal). The first DU, the second DU, and the CU may belong to a same access network device (for example, a gNB). In embodiments of this application, if the terminal is handed over to a cell managed by the candidate DU, the candidate DU may also be referred to as a target DU. For other similar parts (for example, a candidate cell and a candidate access network device), reference may be made for processing.
(3) In the inter-CU handover (Scenario 3), the network device in embodiments of this application includes a first CU, a first DU managed by the first CU (that is, a source DU of the terminal), a second CU, and a second DU managed by the second CU (that is, a candidate DU of the terminal).
(4) In the inter-gNB handover (Scenario 4), the network device in embodiments of this application may include a first access network device (a source access network device) and a second access network device (a candidate access network device).
(5) In the intra-gNB handover (Scenario 5), the network device in embodiments of this application is an access network device (for example, a gNB), and both a source access network device and a candidate access network device of the terminal are the access network device.

The communication method provided in embodiments of this application is described in detail below with reference to Embodiment 1 to Embodiment 3. Unless otherwise specified, the "terminal" may be the terminal, or may be a component in the terminal, for example, a chip or a chip system, and the "network device" may be the network device, or may be a component in the network device, for example, a chip or a chip system.

### Embodiment 1

In Embodiment 1, interaction between a first network device, a second network device, and a terminal is used as an example for description.

For Scenario 1, the first network device and the second network device may be a same DU. In this case, a related operation of interaction between the first network device and the second network device may not be performed. For Scenario 2, the first network device may be a first DU (that is, a source DU), and the second network device may be a second DU (that is, a candidate DU). The first network device and the second network device perform transit communication via a CU, that is, the first DU -> the CU -> the second DU, or the second DU -> the CU -> the first DU. For the transit communication, same information is transferred between different nodes, and names of messages carrying the information may be the same or may be different. This is not limited. For example, a specific implementation of that "the second network device sends a third message to the first network device" is: The second network device sends a third message a to the CU; and after receiving the third message a, the CU sends a third message b to the first network device. Information carried in the third message a is the same as that carried in the third message b, and message names of the third message a and the third message b may be the same or different. The first network device sends a corresponding message to the second network device in the same way, that is, the message is transited via the CU. For Scenario 3, the first network device may be a first DU managed by a first CU, and the second network device may be a second DU managed by a second CU. The first network device and the second network device perform transit communication via the first CU and the second CU, that is, the first DU -> the first CU -> the second CU -> the second DU, or the second DU -> the second CU -> the first CU -> the first DU. For Scenario 4, the first network device may be a first access network device, the second network device may be a second access network device, and the first access network device and the second access network device may communicate with each other through an Xn interface. For Scenario 5, the first network device and the second network device may be a same access network device. In this case, a related operation of interaction between the first network device and the second network device may not be performed.

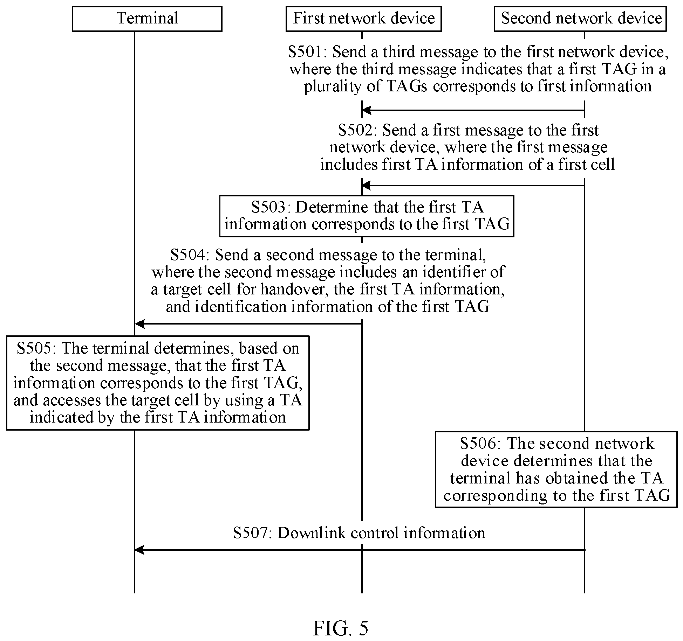

FIG. 5 is a schematic flowchart corresponding to a communication method according to Embodiment 1 of this application. As shown in FIG. 5, the method includes the following steps.

S501: A second network device sends a third message to a first network device, where the third message indicates that a first TAG among a plurality of TAGs corresponds to first information. Correspondingly, the first network device receives the third message.

Herein, the plurality of TAGs (namely, N TAGs) correspond to a same cell, namely, a first cell. The first cell is a candidate target cell of a terminal, the first cell belongs to the second network device, and a source cell of the terminal belongs to the first network device. The plurality of TAGs may be allocated by the second network device to the terminal for the first cell, and the plurality of TAGs are in one-to-one correspondence with a plurality of TRPs corresponding to the first cell. The first cell is used as an example. The first cell corresponds to M TRPs, the first cell corresponds to the N TAGs (in other words, the second network device allocates the N TAGs to the terminal for the first cell), the N TAGs are in one-to-one correspondence with N TRPs in the M TRPs, M and N are both integers greater than 1, and M is greater than or equal to N.

In a possible implementation, the plurality of TAGs include a first TAG and a second TAG. For example, the first TAG corresponds to a first TRP, and the second TAG corresponds to a second TRP. The first TAG is different from the second TAG, the first TRP is different from the second TRP, and the first TRP and the second TRP correspond to the first cell. Optionally, the third message further indicates that the second TAG corresponds to second information.

The first information indicates at least one of the following: the first TRP, a first synchronization signal block (synchronization signal block, SSB), a first random access resource, and the first TAG. The first information may uniquely identify the first TAG from a network side (for example, the second network device). Similar to the first information, the second information indicates at least one of the following: the second TRP, identification information of a second SSB, a second random access resource, and the second TAG. The second information may uniquely identify the second TAG from the network side (for example, the second network device). The following describes three possible examples of the first information with reference to Example 1 to Example 3. For the second information, reference may be made for processing.

Example 1: The first information includes identification information of the first TRP. For example, the identification information of the first TRP may be newly introduced information that uniquely identifies the first TRP. The identification information of the first TRP may be allocated by the second network device.

This example is applicable to a scenario in which the first TRP and another TRP (for example, the second TRP) correspond to a same SSB, and the first TRP and the another TRP (for example, the second TRP) correspond to a same random access resource. For example, refer to Table 1. The first TRP corresponds to an SSB 1 and an SSB 2, the SSB 1 corresponds to a random access resource 1 and a random access resource 2, and the SSB 2 corresponds to a random access resource 3 and a random access resource 4. The second TRP corresponds to the SSB 1 and the SSB 2, the SSB 1 corresponds to the random access resource 1 and the random access resource 2, and the SSB 2 corresponds to the random access resource 3 and the random access resource 4. A random access resource shown in this embodiment of this application is a resource used for one random access attempt. For example, the random access resource 1 is a resource used for one random access attempt, and the random access resource 2 is a resource used for one random access attempt.

**Table 1: Examples of SSBs and random access resources corresponding to the first TRP and the second TRP**

| TRP | SSB | Random access resource |
|---|---|---|
| First TRP | SSB 1 | Random access resource 1 and random access resource 2 |
| | SSB 2 | Random access resource 3 and random access resource 4 |
| Second TRP | SSB 1 | Random access resource 1 and random access resource 2 |
| | SSB 2 | Random access resource 3 and random access resource 4 |

Example 2: The first information includes identification information of a first SSB corresponding to the first TRP. For example, the first TRP corresponds to an SSB set, and the SSB set includes one or more SSBs. The first SSB herein may be the SSB set, or the first SSB is an SSB in the SSB set.

This example is applicable to a scenario in which the first TRP and another TRP (for example, the second TRP) correspond to different SSBs. For example, refer to Table 2. The first TRP corresponds to an SSB 1 and an SSB 2, the SSB 1 corresponds to a random access resource 1 and a random access resource 2, and the SSB 2 corresponds to a random access resource 3 and a random access resource 4. The second TRP corresponds to an SSB 3 and an SSB 4, the SSB 3 corresponds to the random access resource 1 and the random access resource 2, and the SSB 4 corresponds to the random access resource 3 and the random access resource 4.

**Table 2: Examples of SSBs and random access resources corresponding to the first TRP and the second TRP**

| TRP | SSB | Random access resource |
|---|---|---|
| First TRP | SSB 1 | Random access resource 1 and random access resource 2 |
| | SSB 2 | Random access resource 3 and random access resource 4 |
| Second TRP | SSB 3 | Random access resource 1 and random access resource 2 |
| | SSB 4 | Random access resource 3 and random access resource 4 |

It may be understood that Table 2 is shown by using an example in which random access resources corresponding to the first TRP and the second TRP are the same. In another example, random access resources corresponding to the first TRP and the second TRP may alternatively be different.

Example 3: The first information includes identification information of a first random access resource corresponding to the first TRP. The identification information of the first random access resource identifies the first random access resource. For example, the identification information of the first random access resource is information about the first random access resource. Refer to the following descriptions of information 1. For another example, the identification information of the first random access resource is a configuration identifier of the first random access resource.

For example, the first TRP corresponds to a random access resource set, the random access resource set includes one or more random access resources, and each random access resource is used for one time of random access. The first random access resource herein may be the random access resource set, or may be a random access resource in the random access resource set.

This example is applicable to a scenario in which the first TRP and another TRP (for example, the second TRP) correspond to different random access resources. For example, refer to Table 3. The first TRP corresponds to an SSB 1 and an SSB 2, the SSB 1 corresponds to a random access resource 1 and a random access resource 2, and the SSB 2 corresponds to a random access resource 3 and a random access resource 4. The second TRP corresponds to the SSB 1 and the SSB 2, the SSB 1 corresponds to a random access resource 5 and a random access resource 6, and the SSB 2 corresponds to a random access resource 7 and a random access resource 8.

**Table 3: Examples of SSBs and random access resources corresponding to the first TRP and the second TRP**

| TRP | SSB | Random access resource |
|---|---|---|
| First TRP | SSB 1 | Random access resource 1 and random access resource 2 |
| | SSB 2 | Random access resource 3 and random access resource 4 |
| Second TRP | SSB 1 | Random access resource 5 and random access resource 6 |
| | SSB 2 | Random access resource 7 and random access resource 8 |

In addition, after receiving the third message, the first network device may store a correspondence between the first TAG and the first information. This facilitates subsequent determining of a TA corresponding to the first TAG.

S502: The second network device sends a first message to the first network device, where the first message includes first TA information of the first cell. Correspondingly, the first network device receives the first message from the second network device.

For example, the second network device may first obtain the first TA information, and then send the first message to the first network device. The second network device obtains the first TA information in a plurality of manners. A possible manner is described herein.

The second network device sends configuration information of the first cell to the first network device. For example, the third message includes the configuration information of the first cell, and the configuration information of the first cell includes a random access channel (random access channel, RACH) configuration of the first cell. The random access channel configuration may include information (referred to as the information 1 for ease of description) about a random access resource. For example, the random access resource includes a random access time-frequency resource 1 and a first preamble. The information 1 includes information indicating the time-frequency resource 1 and/or identification information of the first preamble, and optionally, further includes a configuration identifier of the random access resource (the configuration identifier corresponds to identification information of the first cell).

The first network device obtains location information of the terminal (for example, obtains the location information of the terminal based on RSRP information of the first cell), and determines, based on the location information of the terminal, that the terminal may subsequently move to coverage of the first cell. The first network device determines that the random access time-frequency resource 1 and the first preamble correspond to the terminal (referred to as a correspondence a), and sends indication information to the terminal, where the indication information may be a physical downlink control channel (physical downlink control channel, PDCCH) order (PDCCH order). The indication information indicates the terminal to send a random access preamble (namely, the first preamble) in the first cell on the random access time-frequency resource 1. For example, the indication information includes identification information of the SSB 1 and an index value of the random access time-frequency resource 1 corresponding to the SSB 1, and further includes identification information of the first preamble. A random access resource corresponding to the SSB 1 includes a plurality of random access time-frequency resources that periodically appear, and the index value of the random access time-frequency resource 1 indicates that the random access time-frequency resource 1 is one of the plurality of random access time-frequency resources.

Correspondingly, after receiving the indication information, the terminal may send the random access preamble (namely, the first preamble) on the random access time-frequency resource 1. Then, the second network device determines the first TA information based on the random access preamble, and determines that the first information corresponds to the first TA information. Specifically, after receiving the random access preamble via the first TRP, the second network device determines the first TA information, and determines that the first TA information corresponds to the first TRP. Optionally, if the second TRP of the first cell also receives the random access preamble, the second network device determines second TA information, and determines that the second information corresponds to the second TA information. Specifically, after receiving the random access preamble via the second TRP, the second network device determines the second TA information, and determines that the second TA information corresponds to the second TRP. In this case, the first message further includes the second TA information.

In addition, the first message further includes the first information.

The first message may further include information (referred to as information 1' for ease of description) about a random access resource corresponding to the first TA information. The information 1' includes an RA-RNTI (namely, a first RA-RNTI) corresponding to the random access time-frequency resource 1, the identification information of the first cell, and/or the identification information of the first preamble. For example, the second network device receives the random access preamble on the random access time-frequency resource 1, and determines the first TA information. The RA-RNTI (namely, the first RA-RNTI) corresponding to the random access time-frequency resource 1 is determined based on the random access time-frequency resource 1. Then, after receiving the first message, the first network device may determine, based on the first RA-RNTI, the identification information of the first preamble, and the correspondence a, that the first TA information corresponds to the terminal.

S503: The first network device determines that the first TA information corresponds to the first TAG.

The first network device determines, in a plurality of manners, that the first TA information corresponds to the first TAG. Two possible implementations are described herein.

### Implementation 1:

When the first message includes the first TA information and the first information, the first network device determines, based on the first message and the third message, that the first TA information corresponds to the first TAG. Specifically, the first network device determines, based on the "correspondence between the first TAG and the first information" indicated by the third message and a "correspondence between the first TA information and the first information" indicated by the first message, that the first TA information corresponds to the first TAG.

Optionally, the first message further includes the second TA information and the second information corresponding to the second TA information. In this way, the first network device determines, based on a "correspondence between the second TAG and the second information" indicated by the third message and a "correspondence between the second TA information and the second information" indicated by the first message, that the second TA information corresponds to the second TAG.

### Implementation 2:

When the first message includes the first TA information, it is assumed that the first TRP and the second TRP correspond to different SSBs or different random access resources. After the first TRP of the first cell receives the first preamble on the random access time-frequency resource 1, the second network device may determine the first TA information of the first cell. Because the random access time-frequency resource 1 corresponds to the first TRP, even if the second TRP of the first cell receives the first preamble on the random access time-frequency resource 1, the second network device may not determine the second TA information of the first cell; or even if the second network device determines the second TA information of the first cell based on the first preamble received on the random access time-frequency resource 1, the second network device does not send the second TA information to the first network device. In other words, the first message includes the first TA information, and does not include other TA information (for example, does not include the second TA information).

In this case, the first network device determines, based on the first message and the third message (and the PDCCH order), that the first TA information corresponds to the first TAG. Different from Implementation 1, the first message does not include the first information corresponding to the first TA information.

For example, the first information indicates the first SSB (for example, the SSB 1). After receiving the first message, the first network device determines, based on the information 1' carried in the first message, the PDCCH order that is of the terminal and that corresponds to the first TA information. Then, the first network device determines, based on the identification information that is of the SSB 1 and that is in the previously sent PDCCH order and a correspondence that is between the first SSB and the first TAG and that is indicated by the third message, that the first TA information corresponds to the first TAG.

For another example, when the first information indicates the first random access resource (for example, the random access time-frequency resource 1 and the first preamble), after receiving the first message, the first network device determines, based on the information 1' carried in the first message, that the first TA information corresponds to the first random access resource, and then determines, based on a correspondence that is between the first random access resource and the first TAG and that is indicated by the third message, that the first TA information corresponds to the first TAG.

For another example, the first information indicates the first TRP. After receiving the first message, the first network device determines, based on the information 1' carried in the first message, the PDCCH order corresponding to the first TA information. Then, the first network device determines, based on the identification information that is of the SSB 1 and that is in the PDCCH order and a correspondence between the first TRP and the first SSB (the correspondence may be sent by the second network device to the first network device, for example, by using the third message), that the first TA information corresponds to the first TRP, and determines, based on a correspondence between the first TAG and the first TRP, that the first TA information corresponds to the first TAG.

For a manner in which the first network device determines that the second TA information corresponds to the second TAG, refer to the foregoing two implementations.

S504: The first network device sends a second message to the terminal, where the second message includes identification information of a target cell for handover, the first TA information, and identification information of the first TAG corresponding to the first TA information, and the target cell is the first cell. Correspondingly, the terminal receives the second message.

For example, the second message is a switch command message, and transmission of the second message may be performed via a medium access control (medium access control, MAC) control element (control element, CE). The second message includes the first TA information, and the first TA information further indicates the terminal to access the target cell in a random access-less or RACH-less (RACH-less) manner.

Optionally, if the first message includes the second TA information, and the first network device determines that the second TA information corresponds to the second TAG, the second message further includes the second TA information and identification information of the second TAG corresponding to the second TA information.

It should be noted that, the identification information of the first TAG corresponding to the first TA information uniquely identifies the first TAG on a terminal side (identifies the first TAG only in this terminal, and needs to correspond to a specific terminal), and is different from the first information (which identifies the first TAG in a cell and may not need to correspond to a specific terminal).

S505: The terminal determines, based on the second message, that the first TA information corresponds to the first TAG, and accesses the target cell by using a TA indicated by the first TA information.

Specifically, the terminal accesses the target cell in the RACH-less manner by using the TA indicated by the first TA information.

For example, the second network device may allocate an uplink resource (for example, the uplink resource corresponds to the first TAG) to the terminal. Then, the terminal may send uplink information to the second network device on the uplink resource by using the TA indicated by the first TA information. Correspondingly, after receiving the uplink information, the second network device may determine that the terminal successfully accesses the target cell.

For example, when receiving the second message, which includes the first TA information corresponding to the first TAG, the terminal starts a timer (namely, a first timing advance timer (timing advance timer)) corresponding to the first TAG. For example, when receiving the second message, the terminal starts the timer (namely, the first timing advance timer) corresponding to the first TAG. During running of the first timing advance timer, it may be considered that uplink synchronization is implemented between the terminal and the first TAG of the target cell. If the second message includes only the first TA information corresponding to the first TAG, only the timer corresponding to the first TAG is started, and a timer corresponding to the second TAG is not started.

For example, when receiving the second message, which includes the second TA information corresponding to the second TAG, the terminal starts the timer (namely, a second timing advance timer) corresponding to the second TAG. For example, when receiving the second message, the terminal starts the timer (namely, the second timing advance timer) corresponding to the second TAG. During running of the second timing advance timer, it may be considered that uplink synchronization is implemented between the terminal and the second TAG of the target cell.

Duration of the first timing advance timer and/or duration of the second timing advance timer are/is provided by the second network device for the terminal, for example, sent to the terminal through transit communication.

S506: The second network device determines that the terminal has obtained the TA corresponding to the first TAG.

For example, with reference to the descriptions in S505, because the second network device receives the uplink information on the uplink resource corresponding to the first TAG, the second network device may determine that the terminal has obtained the TA corresponding to the first TAG. Alternatively, after successfully accessing the target cell, namely, the first cell, the terminal sends first indication information to the second network device. The first indication information indicates that the terminal has obtained the TA corresponding to the first TAG. Therefore, the second network device may determine that the terminal has obtained the TA corresponding to the first TAG. Alternatively, the first network device sends first indication information to the second network device. For example, after sending the second message to the terminal, the first network device sends the first indication information to the second network device. Therefore, the second network device may determine that the terminal has obtained the TA corresponding to the first TAG.

Optionally, the second network device may further determine that the terminal has obtained a TA corresponding to the second TAG. For example, after accessing the first cell, the terminal sends second indication information to the second network device, where the second indication information indicates that the terminal has obtained the TA corresponding to the second TAG. Alternatively, the first network device sends second indication information to the second network device. For example, after sending the second message to the terminal, the first network device sends the second indication information to the second network device.

The first indication information and the second indication information may be different information (for example, the first indication information includes the identification information of the first TAG, and the second indication information includes the identification information of the second TAG), or may be same information (for example, one bit indicates that the TAs corresponding to the first TAG and corresponding to the second TAG have been obtained). When the first indication information and the second indication information are different information, the first indication information and the second indication information may be carried in a same message or different messages. This is not specifically limited.

Optionally, the foregoing method further includes the following step.

S507: The second network device sends downlink control information to the terminal, where the downlink control information indicates an uplink resource or a downlink resource. Correspondingly, the terminal receives the downlink control information, and when the downlink control information or a resource (the uplink resource or the downlink resource) indicated by the downlink control information corresponds to the first TAG, the terminal determines that the handover is completed.

For example, the downlink control information of the first TAG is used as an example. After determining that the terminal has obtained the TA corresponding to the first TAG, the second network device schedules the terminal to perform data transmission of the first TAG, for example, sends the downlink control information to the terminal, where the downlink control information or the resource indicated by the downlink control information corresponds to the first TAG. Optionally, if the second network device determines that the terminal has not obtained the TA corresponding to the first TAG, the second network device does not schedule the terminal to perform data transmission of the first TAG; or first indicates the terminal to perform uplink synchronization, to obtain the TA corresponding to the first TAG.

Optionally, when the downlink control information or the resource indicated by the downlink control information corresponds to a non-first TAG (for example, the second TAG), the terminal cannot determine that the handover is completed (that is, RACH-less handover is completed). It should be specially noted that a beam 1 (that is, a transmission configuration indication state (transmission configuration indication state, TCI state)) corresponds to the first TAG, and this correspondence is preconfigured by the second network device for the terminal. When receiving the downlink control information based on the beam 1, the terminal may determine that the downlink control information corresponds to the first TAG.

For example, in the scenario shown in FIG. 4A, it is assumed that the target cell (namely, the first cell) corresponds to the first TAG and the second TAG. Therefore, the second network device can send downlink control information 1 and/or downlink control information 2 to the terminal, where the downlink control information 1 corresponds to the first TAG, and the downlink control information 2 corresponds to the second TAG. Because the terminal accesses the target cell by using the TA corresponding to the first TAG, the terminal may determine, only when receiving the downlink control information 1, that the handover is completed. If the terminal receives the downlink control information 2, the terminal does not determine that the handover is completed.

For another example, in the scenario shown in FIG. 4B, it is assumed that the target cell (namely, the first cell) corresponds to the first TAG and the second TAG. Therefore, the second network device can send downlink control information 3 to the terminal, where the downlink control information 3 indicates a resource corresponding to the first TAG or a resource corresponding to the second TAG. Because the terminal accesses the target cell by using the TA corresponding to the first TAG, the terminal may determine, only when the downlink control information 3 indicates the resource corresponding to the first TAG, that the handover is completed. If the downlink control information 3 indicates the resource corresponding to the second TAG, the terminal does not determine that the handover is completed.

According to the foregoing method, after determining that the first TA information corresponds to the first TAG, the first network device sends the first TA information and the identification information of the first TAG to the terminal, so that the terminal may determine that the first TA information corresponds to the first TAG. This facilitates quick and effective data transmission of the terminal in the target cell. In this way, data transmission efficiency is improved.

### Embodiment 2

In Embodiment 2, a possible implementation procedure is described based on Embodiment 1 by using Scenario 2 as an example.

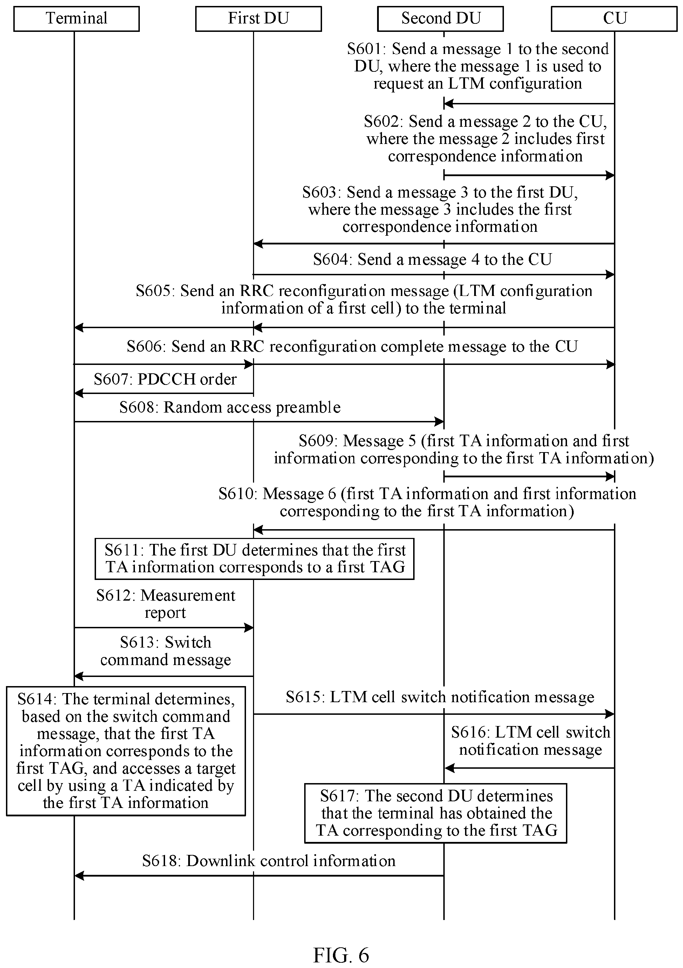

FIG. 6 is a schematic flowchart corresponding to a communication method according to Embodiment 2 of this application. As shown in FIG. 6, the method includes the following steps.

S601: A CU sends a message 1 to a second DU, where the message 1 is used to request an LTM configuration.

For example, the message 1 may include request information, and the request information is used to request random access configurations of a plurality of TAGs.

There may be a plurality of trigger factors for the CU to send the message 1 to the second DU. For example, a terminal sends a measurement report to a first DU. The measurement report includes a layer 3 measurement result, and may specifically include a measurement result of a neighboring cell. The neighboring cell is a cell to which the terminal may be handed over after the terminal moves. Then, the first DU sends the measurement report to the CU. For example, the first DU sends an uplink (uplink, UL) RRC message to the CU, where the UL RRC message includes the measurement report. Correspondingly, the CU may determine, based on the measurement report, whether to initiate the LTM configuration. If the CU determines to initiate the LTM configuration, the CU may send the message 1 to the second DU.

S602: The second DU sends a message 2 (namely, a third message a) to the CU, where the message 2 includes LTM configuration information of a first cell. Correspondingly, the CU receives the message 2.

Herein, the LTM configuration information of the first cell includes a lower-layer RRC configuration, a reference signal configuration, a transmission configuration indication state configuration, and a random access channel configuration of the first cell.

Further, when the message 1 includes the request information, the message 2 further includes first correspondence information of the first cell, and the first correspondence information includes identification information of a first TAG and first information corresponding to the first TAG. Optionally, the message 2 further includes one or more pieces of other correspondence information of the first cell (for example, further includes second correspondence information of the first cell), and the second correspondence information includes identification information of a second TAG and second information corresponding to the second TAG. The first TAG and the second TAG correspond to the first cell, the first TAG corresponds to a first TRP of the first cell, and the second TAG corresponds to a second TRP of the first cell. In this case, the first correspondence information (and the second correspondence information) is/are sent based on a request of the request information.

In another example, the message 1 may not include the request information. In this case, the second DU actively sends the first correspondence information (and the second correspondence information).

The message 1 may be a UE context setup request (UE context setup request) message, and the message 2 may be a UE context modification response (UE context modification response) message.

S603: The CU sends a message 3 (namely, a third message b) to the first DU. Correspondingly, the first DU receives the message 3.

Herein, the message 3 may include the first correspondence information of the first cell, and optionally, further include the second correspondence information of the first cell. Optionally, the message 3 further includes the reference signal configuration, the TCI state configuration, and the RACH configuration of the first cell.

S604: The first DU sends a message 4 to the CU. Correspondingly, the CU receives the message 4.

For example, the message 4 may include a channel state information (channel state information, CSI) resource configuration of a source cell, and the CSI resource configuration is used by the terminal to send, in the source cell, a lower-layer measurement result (for example, a layer 1/layer 2 measurement result) of a candidate cell (for example, the first cell).

The message 3 may be a UE context modification request (UE context modification request) message, and the message 4 may be a UE context modification response (UE context modification response) message.

Optionally, the CU may further send a UE context modification request message to the second DU, where the UE context modification request message may include identification information of the source cell and an RS configuration of the source cell. Correspondingly, the second DU sends a UE context modification response message to the CU, where the UE context modification response message may include a CSI resource configuration generated by the second DU, and the CSI resource configuration is used by the terminal to send, in the first cell, CSI of a candidate cell. For example, after the terminal is handed over to the first cell, the first cell becomes a source cell, and the source cell becomes a candidate cell.

S605: The CU sends an RRC reconfiguration message to the terminal. Correspondingly, the terminal receives the RRC reconfiguration message.

For example, the CU sends the RRC reconfiguration message to the terminal in a plurality of manners. For example, the CU sends a downlink (downlink, DL) RRC message to the first DU, where the DL RRC message includes the RRC reconfiguration message. Correspondingly, after receiving the DL RRC message, the first DU sends the RRC reconfiguration message to the terminal.

The RRC reconfiguration message may include the LTM configuration information of the first cell, and optionally, further include other possible information, for example, the CSI resource configuration of the source cell, a CSI resource configuration of the first cell, and an uplink resource allocated for the first cell by the second DU to the terminal (for example, the uplink resource corresponds to the first TAG).

S606: The terminal sends an RRC reconfiguration complete message to the CU. Correspondingly, the CU receives the RRC reconfiguration complete message.

Herein, after receiving the RRC reconfiguration message, the terminal may send an uplink (uplink, UL) RRC message to the first DU, where the UL RRC message includes the RRC reconfiguration complete message. Then, the first DU may forward the RRC reconfiguration complete message to the CU.

S607: The first DU sends a PDCCH order to the terminal, where the PDCCH order instructs the terminal to send a random access preamble in the first cell. Correspondingly, the terminal receives the PDCCH order.

S608: The terminal sends the random access preamble in the first cell according to the PDCCH order. Correspondingly, the second DU receives the random access preamble.

S609: The second DU determines first TA information based on the random access preamble, and sends a message 5 (namely, a first message a) to the CU, where the message 5 includes the first TA information and the first information corresponding to the first TA information.

S610: The CU sends a message 6 (namely, a first message b) to the first DU, where the message 6 includes the first TA information and the first information corresponding to the first TA information.

S611: The first DU determines that the first TA information corresponds to the first TAG.

It may be understood that the terminal may further perform downlink synchronization with the first cell. For example, the first DU sends a TCI state activation indication of the first cell to the terminal, where the activation indication is used to activate a TCI state of the first cell. The terminal tracks downlink timing of the first cell based on the activation indication of the first cell.

S612: The terminal sends a measurement report to the first DU, where the measurement report includes lower-layer measurement results of a plurality of candidate cells.

For example, the terminal may measure RSs of the plurality of candidate cells based on RS configurations of the plurality of candidate cells, to obtain the lower-layer measurement results of the plurality of candidate cells, and send the lower-layer measurement results of the plurality of candidate cells to the first DU based on the CSI resource configuration of the source cell.

S613: The first DU sends a switch command message (namely, a second message) to the terminal, where the switch command message indicates the terminal to be handed over to the first cell.

S614: The terminal determines, based on the switch command message, that the first TA information corresponds to the first TAG, and accesses a target cell by using a TA indicated by the first TA information.

For example, if the first DU determines, based on the lower-layer measurement results of the plurality of candidate cells, to hand over the terminal to the first cell, the first DU sends the switch command message to the terminal, where the switch command message includes identification information of the target cell for handover, the first TA information, and the first information corresponding to the first TA information. Correspondingly, the terminal accesses the first cell based on the switch command message by using the TA indicated by the first TA information, for example, accesses the first cell through a PUSCH (that is, random access-less).

S615: The first DU sends an LTM cell switch notification message to the CU, where the LTM cell switch notification message indicates that a cell switch command has been initiated for the terminal. Correspondingly, the CU receives the LTM cell switch notification message.

Herein, the LTM cell switch notification message includes the identification information of the target cell.

Optionally, the LTM cell switch notification message further includes first indication information and/or second indication information.

S616: The CU sends an LTM cell switch notification message to the second DU. Correspondingly, the second DU receives the LTM cell switch notification message.

S617: The second DU determines that the terminal has obtained the TA corresponding to the first TAG.

S618: The second DU sends downlink control information to the terminal, where the downlink control information indicates an uplink resource or a downlink resource. Correspondingly, the terminal receives the downlink control information, and when the downlink control information or a resource indicated by the downlink control information corresponds to the first TAG, the terminal determines that the handover is completed.

Optionally, after detecting access of the terminal, the second DU sends an access success message to the CU. After receiving the access success message, the CU sends a UE context release command message to the first DU. The UE context release command message indicates to release a resource of a candidate cell of a source DU. Then, after releasing the resource of the candidate cell of the source DU based on the UE context release command message, the first DU sends a UE context release complete message to the CU.

It may be understood that the procedure shown in FIG. 6 corresponds to the procedure shown in FIG. 5, and steps of the two may be mutually referenced. For example, S602 and S603 correspond to S501 in Embodiment 1, S609 and S610 correspond to S502 in Embodiment 1, S611 corresponds to S503 in Embodiment 1, S613 corresponds to S504 in Embodiment 1, S614 corresponds to S505 in Embodiment 1, S617 corresponds to S506 in Embodiment 1, and S618 corresponds to S507 in Embodiment 1.

### Embodiment 3

In Embodiment 3, interaction between a first network device, a second network device, and a terminal is used as an example for description. For the first network device and the second network device, refer to the descriptions in Embodiment 1.

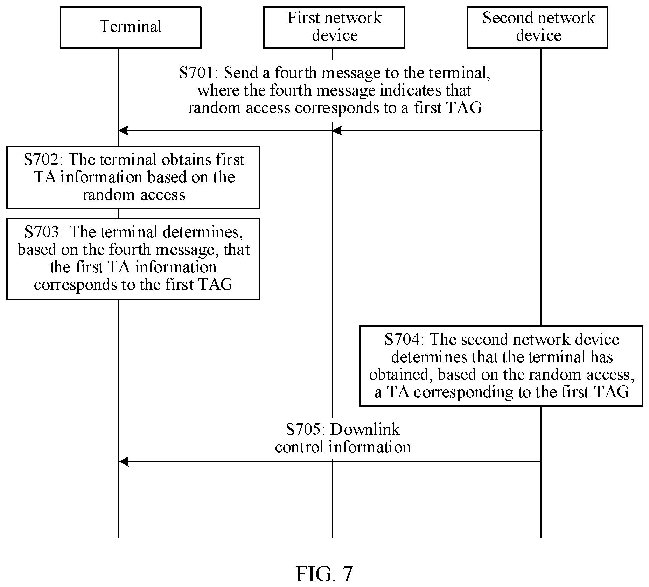

FIG. 7 is a schematic flowchart corresponding to a communication method according to Embodiment 3 of this application. As shown in FIG. 7, the method includes the following steps.

S701: A second network device sends a fourth message to a terminal, where the fourth message indicates that random access corresponds to a first TAG. Correspondingly, the terminal receives the fourth message. In a possible implementation, the second network device sends the fourth message to the terminal in a plurality of implementations. For example, in Scenario 2, the second network device may send the fourth message to the terminal through transit communication.

S701 may alternatively be replaced with S701'. S701': A first network device sends a fourth message to a terminal, where the fourth message indicates that random access corresponds to a first TAG. Correspondingly, the terminal receives the fourth message. In a possible implementation, the fourth message is a switch command message. A second network device may indicate, to the first network device, that the random access corresponds to the first TAG. Then, the first network device indicates, to the terminal by using the switch command message, that the random access corresponds to the first TAG.

The first TAG is one of a plurality of TAGs, and the plurality of TAGs correspond to a first cell (in other words, the second network device allocates the plurality of TAGs to the terminal for the first cell). For example, the plurality of TAGs include the first TAG and a second TAG, the first TAG corresponds to a first TRP of the first cell, and the second TAG corresponds to a second TRP of the first cell. The first TRP and the second TRP correspond to different random access resources.

For example, the fourth message includes correspondence information (which may be referred to as third correspondence information), and the third correspondence information indicates that the random access corresponds to the first TAG. That "the random access corresponds to the first TAG" may mean that a TA field in the switch command message for the first cell corresponds to the first TAG. For example, the third correspondence information includes identification information of the first TAG, and the identification information of the first TAG indicates that the random access corresponds to the first TAG.

For example, the fourth message is an RRC reconfiguration message, the RRC reconfiguration message includes LTM configuration information of the first cell, and the third correspondence information may be included in the LTM configuration information of the first cell.

S702: The terminal obtains first TA information based on the random access.

For example, the second network device may send a random access channel configuration of the first cell to the first network device, where the random access channel configuration may include information about a random access resource, and the random access resource is a random access resource corresponding to the first TAG (or the first TRP). For example, the random access resource includes a random access time-frequency resource 1 and a first preamble. The first network device is a network device to which a source cell of the terminal belongs.

The first network device obtains location information of the terminal, and sends indication information to the terminal if that the terminal may subsequently move to coverage of the first cell is determined based on the location information of the terminal. The indication information may be a PDCCH order. The indication information indicates the terminal to send a random access preamble (namely, the first preamble) in the first cell on the random access time-frequency resource 1. For example, the indication information includes identification information of an SSB 1 and an index value of the random access time-frequency resource 1 corresponding to the SSB 1, and further includes the first preamble.

Correspondingly, after receiving the indication information, the terminal may send the random access preamble (namely, the first preamble) in the first cell on the random access time-frequency resource 1. Then, after the first TRP of the first cell receives the random access preamble, a network device (namely, the second network device) to which the first cell belongs determines the first TA information, and sends the first TA information to the first network device. It may be understood that because the random access time-frequency resource 1 corresponds to the first TRP, even if the second TRP of the first cell receives the random access preamble on the random access time-frequency resource 1, the second network device does not determine second TA information of the first cell; or even if the second network device determines second TA information of the first cell based on the random access preamble received on the random access time-frequency resource 1, the second network device does not send the second TA information to the first network device.

Subsequently, if the first network device determines to hand over the terminal to the first cell, the first network device sends the switch command message to the terminal. The switch command message includes identification information of a target cell for handover and the first TA information, and the first TA information is carried in the TA field in the switch command message. The target cell is the first cell. In other words, the switch command message is a switch command message for the first cell. Then, the terminal may obtain the first TA information from the switch command message.

S703: The terminal determines, based on the fourth message, that the first TA information corresponds to the first TAG.

Herein, the terminal determines, based on the third correspondence information in the fourth message, that the first TA information obtained from the TA field in the switch command message for the first cell corresponds to the first TAG.

S704: The second network device determines that the terminal has obtained, based on the random access, a TA corresponding to the first TAG.

Optionally, the foregoing method further includes the following step.

S705: The second network device sends downlink control information to the terminal, where the downlink control information indicates an uplink resource or a downlink resource. Correspondingly, the terminal receives the downlink control information, and when the downlink control information or a resource indicated by the downlink control information corresponds to the first TAG, the terminal determines that the handover is completed.

For S704 and S705, refer to S506 and S507 in Embodiment 1.

According to the foregoing method, the second network device indicates, to the terminal, that the random access corresponds to the first TAG, so that after obtaining the first TA information based on the random access, the terminal may determine that the first TA information corresponds to the first TAG. This facilitates quick and effective data transmission of the terminal in a target cell. In this way, data transmission efficiency is improved.

### Embodiment 4

In Embodiment 4, a possible implementation procedure is described based on Embodiment 3 by using Scenario 2 as an example.

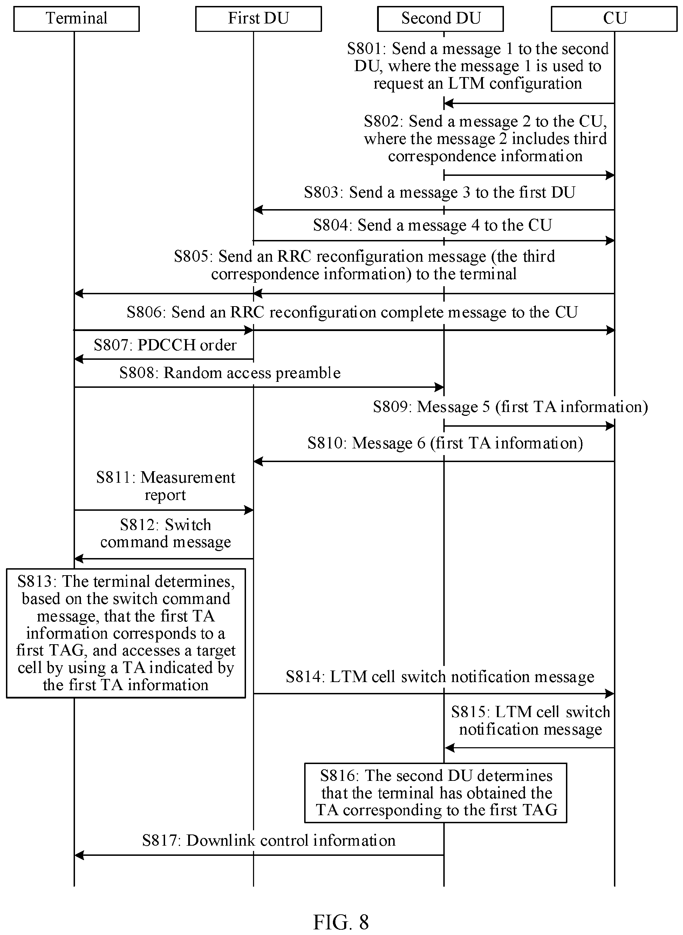

FIG. 8 is a schematic flowchart corresponding to a communication method according to Embodiment 4 of this application. As shown in FIG. 8, the method includes the following steps.

S801: A CU sends a message 1 to a second DU, where the message 1 is used to request an LTM configuration.

For example, the message 1 may include request information, and the request information is used to request random access configurations of a plurality of TAGs.

S802: The second DU sends a message 2 to the CU, where the message 2 includes LTM configuration information of a first cell. Correspondingly, the CU receives the message 2.

Herein, the LTM configuration information of the first cell includes a lower-layer RRC configuration, a reference signal configuration, a transmission configuration indication state configuration, and a random access channel configuration of the first cell.

Further, when the message 1 includes the request information, the message 2 includes third correspondence information, and the third correspondence information indicates that random access corresponds to a first TAG. Alternatively, the message 1 may not include the request information. In this case, the second DU actively sends the third correspondence information.

S803: The CU sends a message 3 to a first DU. Correspondingly, the first DU receives the message 3.

Herein, the message 3 includes the random access channel configuration of the first cell, the random access configuration may include information about a random access resource, and the random access resource is a random access resource corresponding to the first TAG (or a first TRP). Optionally, the message 3 further includes the reference signal configuration, the TCI state configuration, and the RACH configuration of the first cell.

S804: The first DU sends a message 4 to the CU. Correspondingly, the CU receives the message 4.

For example, the message 4 may include a channel state information resource configuration of a source cell, and the CSI resource configuration is used by the terminal to send, in the source cell, a lower-layer measurement result (for example, a layer 1/layer 2 measurement result) of a candidate cell (for example, the first cell).

For message names of the message 1 to the message 4, refer to the descriptions in Embodiment 2.

S805: The CU sends an RRC reconfiguration message to the terminal. Correspondingly, the terminal receives the RRC reconfiguration message.

Herein, the RRC reconfiguration message includes the LTM configuration information of the first cell, and further includes the third correspondence information, where the third correspondence information indicates that the random access corresponds to the first TAG.

S806: The terminal sends an RRC reconfiguration complete message to the CU. Correspondingly, the CU receives the RRC reconfiguration complete message.

S807: The first DU sends a PDCCH order to the terminal, where the PDCCH order instructs the terminal to send a random access preamble in the first cell. Correspondingly, the terminal receives the PDCCH order.

S808: The terminal sends the random access preamble in the first cell according to the PDCCH order. Correspondingly, the second DU receives the random access preamble.

S809: The second DU determines first TA information based on the random access preamble, and sends a message 5 to the CU, where the message 5 includes the first TA information.

S810: The CU sends a message 6 to the first DU, where the message 6 includes the first TA information. Correspondingly, the first DU receives the message 6 to obtain the first TA information.

S811: The terminal sends a measurement report to the first DU, where the measurement report includes lower-layer measurement results of a plurality of candidate cells.

S812: The first DU sends a switch command message to the terminal, where the switch command message indicates the terminal to be handed over to the first cell.

The switch command message includes identification information of a target cell for handover and the first TA information.

S813: The terminal determines that the first TA information corresponds to the first TAG, and accesses the target cell by using a TA indicated by the first TA information.

For example, the terminal may determine, based on the RRC reconfiguration message indicating that the random access corresponds to the first TAG, that the first TA information corresponds to the first TAG.

S814: The first DU sends an LTM cell switch notification (Cell Switch Notification) message to the CU, where the LTM cell switch notification message indicates that a cell switch command (Cell switch Command) has been initiated for the terminal. Correspondingly, the CU receives the LTM cell switch notification message.

Herein, the LTM cell switch notification message includes the identification information of the target cell.

S815: The CU sends an LTM cell switch notification message to the second DU. Correspondingly, the second DU receives the LTM cell switch notification message.

S816: The second DU determines that the terminal has obtained the TA corresponding to the first TAG.

S817: The second DU sends downlink control information to the terminal, where the downlink control information indicates an uplink resource or a downlink resource. Correspondingly, the terminal receives the downlink control information, and when the downlink control information or a resource indicated by the downlink control information corresponds to the first TAG, the terminal determines that the handover is completed.

It may be understood that the procedure shown in FIG. 8 corresponds to the procedure shown in FIG. 7, and steps of the two may be mutually referenced. For example, S801 to S805 correspond to S701 in Embodiment 1, S807 to S812 correspond to S702 in Embodiment 1, S813 corresponds to S703 in Embodiment 1, S816 corresponds to S704 in Embodiment 1, and S817 corresponds to S705 in Embodiment 1.

### Embodiment 5

In Embodiment 5, interaction between a first network device, a second network device, and a terminal is used as an example for description. For the first network device and the second network device, refer to the descriptions in Embodiment 1.

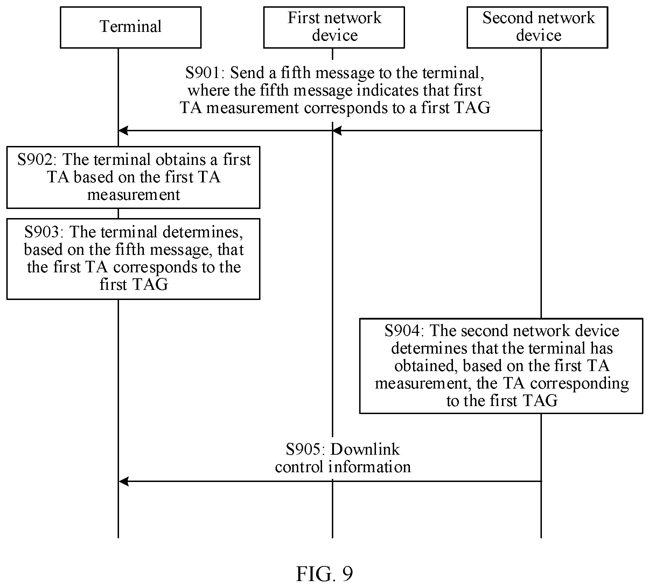

FIG. 9 is a schematic flowchart corresponding to a communication method according to Embodiment 5 of this application. As shown in FIG. 9, the method includes the following steps.

S901: A second network device sends a fifth message to a terminal, where the fifth message indicates that first TA measurement corresponds to a first TAG. Correspondingly, the terminal receives the fifth message. In a possible implementation, the fifth message may be an RRC reconfiguration message. The second network device sends the fifth message to the terminal in a plurality of implementations. For example, in Scenario 2, the second network device may send the fifth message to the terminal through transit communication.

S901 may alternatively be replaced with S901'. S901': A first network device sends a fifth message to a terminal, where the fifth message indicates that first TA measurement corresponds to a first TAG. Correspondingly, the terminal receives the fifth message. In a possible implementation, the fifth message is a switch command message.

The first TAG is one of a plurality of TAGs, and the plurality of TAGs correspond to a first cell (in other words, the second network device allocates the plurality of TAGs to the terminal for the first cell). For example, the plurality of TAGs include the first TAG and a second TAG. For example, the first TAG corresponds to a first TRP, the second TAG corresponds to a second TRP, the first TRP and the second TRP correspond to the first cell, and the first TRP and the second TRP correspond to different reference signals. For example, the reference signal may be a channel state information reference signal (channel state information reference signal, CSI-RS) or an SSB.

Optionally, the fifth message further indicates that second TA measurement corresponds to the second TAG.

That "the first TA measurement corresponds to the first TAG" may mean that a first reference signal of the first cell corresponds to the first TAG. That "the second TA measurement corresponds to the second TAG" may mean that a second reference signal of the first cell corresponds to the second TAG. For example, the fifth message includes fourth correspondence information, and the fourth correspondence information indicates that the first TA measurement corresponds to the first TAG. The fourth correspondence information may include configuration information of the first reference signal (for example, identification information of the first reference signal) and identification information of the first TAG corresponding to the first reference signal. Optionally, the fifth message further includes fifth correspondence information, the fifth correspondence information indicates that the second TA measurement corresponds to the second TAG. The fifth correspondence information includes configuration information of the second reference signal and identification information of the second TAG corresponding to the second reference signal. In addition, the fifth message further includes a first measurement identifier corresponding to the first reference signal and a second measurement identifier corresponding to the second reference signal. For example, the first reference signal includes an SSB 0 to an SSB 10, and the second reference signal includes an SSB 11 to an SSB 20. The first measurement identifier and the second measurement identifier may be the same, or may be different.

In a possible example, if the fifth message includes a TAG identifier (for example, a first TAG identifier or a second TAG identifier), the TAG identifier may further indicate a TAG corresponding to the first TA measurement.

It should be noted that, that "the first TA measurement corresponds to the first TAG" may also be understood as that a TA determined by the terminal based on the first TA measurement corresponds to the first TAG. That "the second TA measurement corresponds to the second TAG" may also be understood as that a TA determined by the terminal based on the second TA measurement corresponds to the second TAG.

In a possible example, in S901, the fifth message is the RRC reconfiguration message, the RRC reconfiguration message further includes LTM configuration information of the first cell, and the fourth correspondence information (and the fifth correspondence information) may be included in the LTM configuration information of the first cell.

In another possible example, in S901', the fifth message is the switch command message, and transmission of the switch command message is performed via a MAC CE. The fourth correspondence information (and the fifth correspondence information) may be sent by the second network device to the first network device, and then sent by the first network device to the terminal by using the switch command message. In this case, the second network device sends an RRC reconfiguration message to the terminal, where the RRC reconfiguration message includes LTM configuration information of the first cell, for example, the RRC reconfiguration message indicates that the first reference signal corresponds to the first measurement identifier. The first network device sends the switch command message to the terminal, for example, the switch command message includes the fourth correspondence information (and the fifth correspondence information). The RRC reconfiguration message is sent to the terminal before the switch command message.

In addition, the first network device (in other words, a network device to which a source cell of the terminal belongs) may send configuration information of a second cell (for example, the second cell is the source cell) to the terminal. For example, configuration information of the source cell includes configuration information of a third reference signal of the source cell and a third measurement identifier corresponding to the third reference signal.

S902: The terminal obtains a first TA based on the first TA measurement.

For example, a specific implementation in which the terminal obtains the first TA based on the first TA measurement may be: The terminal measures the first reference signal to obtain first downlink timing, and measures the third reference signal to obtain third downlink timing. When the first measurement identifier is the same as the third measurement identifier, the terminal obtains the first TA through calculation based on the first downlink timing, the third downlink timing, and a TA of the source cell. For details, refer to Formula 1 or Formula 2.

Optionally, the terminal further obtains a second TA based on the second TA measurement. A specific implementation may be as follows: The terminal measures the second reference signal to obtain second downlink timing; and measures the third reference signal to obtain the third downlink timing. When the second measurement identifier is the same as the third measurement identifier, the terminal obtains the second TA through calculation based on the second downlink timing, the third downlink timing, and the TA of the source cell. For details, refer to Formula 1 or Formula 2.

S903: The terminal determines, based on the fifth message, that the first TA corresponds to the first TAG.

For example, the terminal determines, based on a correspondence that is between the first TA measurement and the first TAG and that is in the fifth message, that the first TA corresponds to the first TAG.

In a possible implementation, the terminal determines, based on a correspondence that is between the first reference signal and the first TAG and that is in the fifth message, that the first TA corresponds to the first TAG. Optionally, the terminal determines, based on a correspondence that is between the second reference signal and the second TAG and that is in the fifth message, that the second TA corresponds to the second TAG.

It should be noted that, when the fifth message is the switch command message, an execution sequence of the foregoing steps is S902 -> S901' -> S903. When the fifth message is the RRC reconfiguration message (in other words, a message different from the switch command message), an execution sequence of the foregoing steps is S901 -> S902 -> S903.

S904: The second network device determines that the terminal has obtained, based on the first TA measurement, the TA corresponding to the first TAG.

For example, if the first network device determines to hand over the terminal to the first cell, the first network device sends the switch command message to the terminal, where the switch command message includes identification information of a target cell for handover, and the target cell is the first cell. Correspondingly, after receiving the switch command message, the terminal may access the first cell by using the first TA. In this case, the switch command message may not include TA information.

For example, the second network device may allocate an uplink resource (for example, the uplink resource corresponds to the first TAG) to the terminal. Then, the terminal may send uplink information to the second network device on the uplink resource by using the first TA. Correspondingly, after receiving the uplink information, the second network device may determine that the terminal successfully accesses the target cell. Because the second network device receives the uplink information on the uplink resource corresponding to the first TAG, the second network device may determine that the terminal has obtained the TA corresponding to the first TAG. Alternatively, after successfully accessing the first cell, the terminal sends first indication information to the second network device, where the first indication information indicates that the terminal has obtained the TA corresponding to the first TAG. Alternatively, the first network device sends first indication information to the second network device. For example, after sending the switch command message to the terminal, the first network device sends the first indication information to the second network device. For example, there is a correspondence b between a TCI state 1 and the first TAG. The first indication information may be identification information of the TCI state 1. The identification information of the TCI state 1 is also indicated to the terminal in the switch command message, and indicates a beam corresponding to a PDCCH or a PDSCH of the target cell of the terminal. The second network device determines, based on the identification information of the TCI state 1 and the correspondence b, that the terminal has obtained the TA corresponding to the first TAG.

Optionally, the second network device may further determine that the terminal has obtained the TA corresponding to the second TAG. For example, after accessing the first cell, the terminal sends second indication information to the second network device, where the second indication information indicates that the terminal has obtained the TA corresponding to the second TAG. Alternatively, the first network device sends second indication information to the second network device. For example, after sending the switch command message to the terminal, the first network device sends the second indication information to the second network device. For example, there is a correspondence c between a TCI state 2 and the second TAG. The first indication information may be identification information of the TCI state 2. The identification information of the TCI state 2 is also indicated to the terminal in the switch command message, and indicates a beam corresponding to a PDCCH or a PDSCH of the target cell of the terminal. The second network device determines, based on the identification information of the TCI state 2 and the correspondence c, that the terminal has obtained the TA corresponding to the second TAG.

For example, when receiving a second message and obtaining the first TA based on the first TA measurement, the terminal starts a timer (namely, a first timing advance timer) corresponding to the first TAG. For example, when receiving the second message, the terminal starts the timer (namely, the first timing advance timer) corresponding to the first TAG. During running of the first timing advance timer, it may be considered that uplink synchronization is implemented between the terminal and the first TAG of the target cell. When the first TA is not obtained, a timer corresponding to the first TAG does not need to be started.

For example, when receiving the second message and obtaining the second TA based on the second TA measurement, the terminal starts a timer (namely, a second timing advance timer) corresponding to the second TAG. For example, when receiving the second message, the terminal starts the timer (namely, the second timing advance timer) corresponding to the second TAG. During running of the second timing advance timer, it may be considered that uplink synchronization is implemented between the terminal and the second TAG of the target cell. When the second TA is not obtained, a timer corresponding to the second TAG does not need to be started.

Duration of the first timing advance timer and/or duration of the second timing advance timer are/is provided by the second network device for the terminal.

Optionally, the foregoing method further includes the following step.

S905: The second network device sends downlink control information to the terminal, where the downlink control information indicates an uplink resource or a downlink resource. Correspondingly, the terminal receives the downlink control information, and when the downlink control information or a resource indicated by the downlink control information corresponds to the first TAG, the terminal may determine that the handover is completed.

For S905, refer to S507 in Embodiment 1.

According to the foregoing method, the second network device indicates, to the terminal, that the first TA measurement corresponds to the first TAG, so that after obtaining first TA information based on the first TA measurement, the terminal may determine that the first TA information corresponds to the first TAG. This facilitates quick and effective data transmission of the terminal in the target cell. In this way, data transmission efficiency is improved.

### Embodiment 6

In Embodiment 6, a possible implementation procedure is described based on Embodiment 5 by using Scenario 2 as an example.

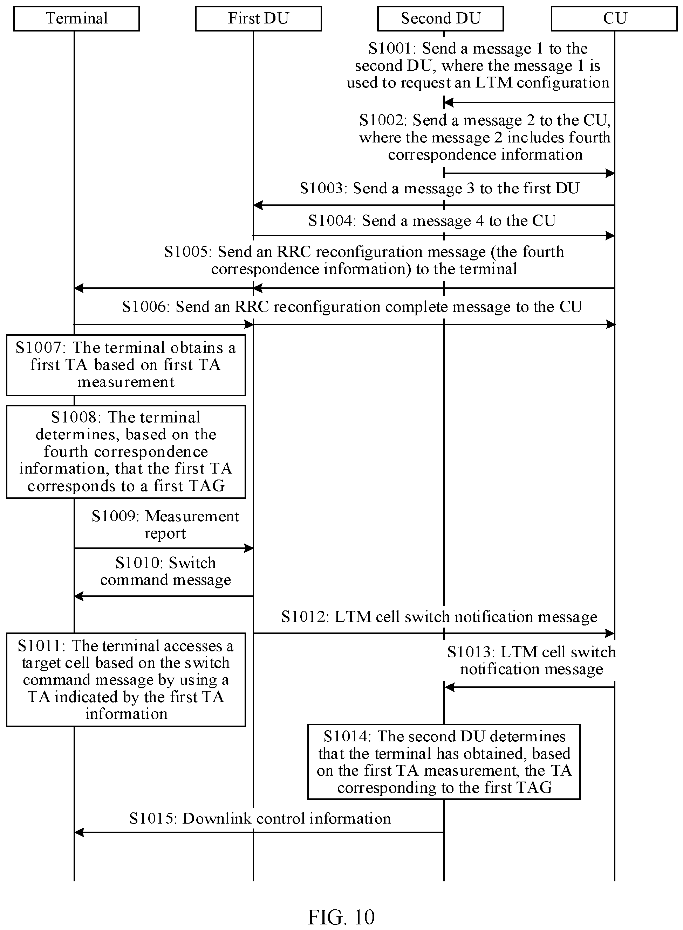

FIG. 10 is a schematic flowchart corresponding to a communication method according to Embodiment 6 of this application. As shown in FIG. 10, the method includes the following steps.

S1001: A CU sends a message 1 to a second DU, where the message 1 is used to request an LTM configuration.

For example, the message 1 may include request information, and the request information is used to request TA measurement configurations of a plurality of TAGs.

S1002: The second DU sends a message 2 to the CU, where the message 2 includes LTM configuration information of a first cell. Correspondingly, the CU receives the message 2.

Herein, the LTM configuration information of the first cell includes a lower-layer RRC configuration, a reference signal configuration, a transmission configuration indication state configuration, and a random access channel configuration of the first cell. The message 2 further includes fourth correspondence information (and fifth correspondence information).

For example, when the message 1 includes the request information, the message 2 includes the fourth correspondence information (and the fifth correspondence information). Alternatively, the message 1 may not include the request information. In this case, the second DU actively sends the fourth correspondence information (and the fifth correspondence information).

S1003: The CU sends a message 3 to a first DU. Correspondingly, the first DU receives the message 3.

For example, the message 3 further includes the reference signal configuration, the TCI state configuration, and the RACH configuration of the first cell.

S1004: The first DU sends a message 4 to the CU. Correspondingly, the CU receives the message 4.

For example, the message 4 may include a channel state information (channel state information, CSI) resource configuration of a source cell, and the CSI resource configuration is used by a terminal to send, in the source cell, a lower-layer measurement result (for example, a layer 1/layer 2 measurement result) of a candidate cell (for example, the first cell).

For message names of the message 1 to the message 4, refer to the descriptions in Embodiment 2.

S1005: The CU sends an RRC reconfiguration message to the terminal. Correspondingly, the terminal receives the RRC reconfiguration message.

Herein, the RRC reconfiguration message includes the fourth correspondence information (and the fifth correspondence information).

S1006: The terminal sends an RRC reconfiguration complete message to the CU. Correspondingly, the CU receives the RRC reconfiguration complete message.

S1007: The terminal obtains a first TA based on first TA measurement.

S1008: The terminal determines, based on the fourth correspondence information in the RRC reconfiguration message, that the first TA corresponds to a first TAG.

Optionally, the terminal obtains a second TA based on second TA measurement, and determines, based on the fifth correspondence information in the RRC reconfiguration message, that the second TA corresponds to a second TAG.

S1009: The terminal sends a measurement report to the first DU, where the measurement report includes lower-layer measurement results of a plurality of candidate cells.

S1010: The first DU sends a switch command message to the terminal, where the switch command message indicates the terminal to be handed over to the first cell.

The switch command message includes identification information of a target cell for handover, and the target cell is the first cell.

S1011: The terminal accesses the target cell based on the switch command message by using a TA indicated by the first TA.

S1012: The first DU sends an LTM cell switch notification message to the CU, where the LTM cell switch notification message indicates that a cell switch command has been initiated for the terminal. Correspondingly, the CU receives the LTM cell switch notification message.

Herein, the LTM cell switch notification message includes the identification information of the target cell.

S1013: The CU sends an LTM cell switch notification message to the second DU. Correspondingly, the second DU receives the LTM cell switch notification message.

S1014: The second DU determines that the terminal has obtained, based on the first TA measurement, the TA corresponding to the first TAG.

S1015: The second DU sends downlink control information to the terminal, where the downlink control information indicates an uplink resource or a downlink resource. Correspondingly, the terminal receives the downlink control information, and when the downlink control information or a resource indicated by the downlink control information corresponds to the first TAG, the terminal determines that the handover is completed.

It may be understood that the procedure shown in FIG. 10 corresponds to the procedure shown in FIG. 9, and steps of the two may be mutually referenced. For example, S1001 to S1005 correspond to S901 in Embodiment 1, S1007 corresponds to S902 in Embodiment 1, S1008 corresponds to S903 in Embodiment 1, S1014 corresponds to S904 in Embodiment 1, and S1015 corresponds to S905 in Embodiment 1.

For the foregoing plurality of embodiments, it may be understood that:
(1) In embodiments of this application, "correspondence" may alternatively be replaced with "association", "correlation", or "mapping". That "the first TAG corresponds to the first information" is used as an example. That the first TAG corresponds to the first information represents that when there are the plurality of TAGs, the first TAG among the plurality of TAGs may be indexed by using the first information.
(2) In embodiments of this application, unless otherwise specified or there is a logic conflict, terms and/or descriptions in different embodiments are consistent and may be mutually referenced, and technical features in the different embodiments may be combined based on an internal logical relationship thereof, to form a new embodiment. In addition, in a same embodiment, mutual reference may also be made between different implementations or different examples.
(3) Various numerals in this application are for differentiation merely for ease of description, but are not for limiting the scope of this application. Step numbers in the foregoing flowcharts are merely examples of execution procedures, and do not constitute a limitation on an execution sequence of the steps. In other words, the step numbers do not mean the execution sequence, and the execution sequence of the steps should be determined based on a function and internal logic of the steps. In addition, not all steps shown in each flowchart are mandatory, and some steps may be added or deleted for each flowchart based on an actual requirement.

The foregoing mainly describes the solutions provided in embodiments of this application from a perspective of interaction between the network device and the terminal. It may be understood that, to implement the foregoing functions, the network device or the terminal may include corresponding hardware structures and/or software modules for performing each function. A person skilled in the art should be easily aware that, in combination with units and algorithm steps of the examples described in embodiments disclosed in this specification, embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional units may be performed on the network device and the terminal based on the foregoing method examples. For example, division into each functional unit may be based on each corresponding function, or two or more than two functions may be integrated into one unit. The integrated unit may be implemented in a form of hardware, or may be implemented in a form of a software functional unit.

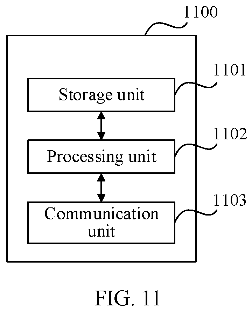

When an integrated unit is used, FIG. 11 shows a possible example block diagram of an apparatus according to an embodiment of this application. As shown in FIG. 11, the apparatus 1100 may include: a processing unit 1102 and a communication unit 1103. The processing unit 1102 is configured to control and manage an action of the apparatus 1100. The communication unit 1103 is configured to support communication between the apparatus 1100 and another device. Optionally, the communication unit 1103 is also referred to as a transceiver unit, and may include a receiving unit and/or a sending unit respectively configured to perform a receiving operation and a sending operation. The apparatus 1100 may further include a storage unit 1101, configured to store program code and/or data of the apparatus 1100.
(1) The apparatus 1100 may be the first network device in the foregoing embodiments. The processing unit 1102 may support the apparatus 1100 in performing actions of the first network device in the foregoing method examples. Alternatively, the processing unit 1102 mainly performs internal actions of the first network device in the method examples, and the communication unit 1103 may support communication between the apparatus 1100 and another device.

For example, in an embodiment, the communication unit 1103 is configured to: receive a first message, where the first message includes first timing advance TA information of a first cell; determine that the first TA information corresponds to a first timing advance group TAG among a plurality of TAGs, where the plurality of TAGs correspond to the first cell; and send a second message to a terminal, where the second message includes identification information of a target cell for handover of the terminal, the first TA information, and identification information of the first TAG corresponding to the first TA information, and the target cell is the first cell.

In a possible design, the first message further includes first information corresponding to the first TA information. The communication unit 1103 is further configured to receive a third message, where the third message indicates that the first TAG corresponds to the first information. The processing unit 1102 is configured to determine, based on the first message and the third message, that the first TA information corresponds to the first TAG.

In a possible design, the processing unit 1102 is specifically configured to determine, based on a correspondence between the first TA information and the first information and a correspondence between the first TAG and the first information, that the first TA information corresponds to the first TAG.

In a possible design, the first information indicates at least one of the following: a first TRP, a first SSB, and a first random access resource. The first TRP corresponds to the first cell.

In a possible design, the communication unit 1103 is further configured to send first indication information, where the first indication information indicates that the terminal has obtained a TA corresponding to the first TAG.

In a possible design, the first message further includes second TA information of the first cell. The processing unit 1102 is specifically configured to determine that the second TA information corresponds to a second TAG in the plurality of TAGs. The second message further includes the second TA information and identification information of the second TAG corresponding to the second TA information.

In a possible design, the communication unit 1103 is further configured to send second indication information, where the second indication information indicates that the terminal has obtained a TA corresponding to the second TAG.

(2) The apparatus 1100 may be the terminal in the foregoing embodiments. The processing unit 1102 may support the apparatus 1100 in performing actions of the terminal in the foregoing method examples. Alternatively, the processing unit 1102 mainly performs internal actions of the terminal in the method examples, and the communication unit 1103 may support communication between the apparatus 1100 and another device.

For example, in an embodiment, the communication unit 1103 is configured to receive a second message, where the second message includes identification information of a target cell for handover of the terminal, first TA information, and identification information of a first TAG, the first TAG is one of a plurality of TAGs, and the plurality of TAGs correspond to the target cell. The processing unit 1102 is configured to: determine, based on the second message, that the first TA information corresponds to the first TAG; and access the target cell by using a TA indicated by the first TA information.

In a possible design, the processing unit 1102 is further configured to: when the second message is received, start a timer corresponding to the first TAG, where uplink synchronization is implemented between the terminal and the target cell during running of the timer.

In a possible design, the communication unit 1103 is further configured to receive downlink control information in the target cell, where the downlink control information indicates a resource, and the resource is an uplink resource or a downlink resource. The processing unit 1102 is further configured to: when the downlink control information or the resource indicated by the downlink control corresponds to the first TAG, determine that the handover is completed.

In a possible design, the communication unit 1103 is further configured to send first indication information, where the first indication information indicates that the terminal has obtained the TA corresponding to the first TAG.

In a possible design, the second message further includes second TA information and identification information of a second TAG. The processing unit 1102 is further configured to determine, based on the second message, that the second TA information corresponds to the second TAG.

In a possible design, the communication unit 1103 is further configured to send second indication information, where the second indication information indicates that the terminal has obtained a TA corresponding to the second TAG.

(3) The apparatus 1100 may be the second network device in the foregoing embodiments. The processing unit 1102 may support the apparatus 1100 in performing actions of the second network device in the foregoing method examples. Alternatively, the processing unit 1102 mainly performs internal actions of the second network device in the method examples, and the communication unit 1103 may support communication between the apparatus 1100 and another device.

For example, in an embodiment, the communication unit 1103 is configured to: send a third message, where the third message indicates that a first TAG among a plurality of TAGs corresponds to first information, and the plurality of TAGs correspond to a first cell; and send a first message, where the first message includes first TA information and the first information corresponding to the first TA information, and the first message and the third message are used to determine that the first TA information corresponds to the first TAG. The processing unit 1102 is configured to determine that a terminal has obtained a TA corresponding to the first TAG.

In a possible design, the first information indicates at least one of the following: a first TRP, a first SSB, and a first random access resource. The first TRP corresponds to the first cell.

In a possible design, the communication unit 1103 is further configured to receive request information, where the request information is used to request random access configurations corresponding to the plurality of TAGs.

In a possible design, the communication unit 1103 is further configured to receive first indication information, where the first indication information indicates that the terminal has obtained the TA corresponding to the first TAG.

In a possible design, the third message further indicates that a second TAG in the plurality of TAGs corresponds to second information, the first message further includes second TA information and the second information corresponding to the second TA information, and the first message and the third message are further used to determine that the second TA information corresponds to the second TAG. The communication unit 1103 is further configured to receive second indication information, where the second indication information indicates that the terminal has obtained a TA corresponding to the second TAG.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form of the software invoked by the processing element.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

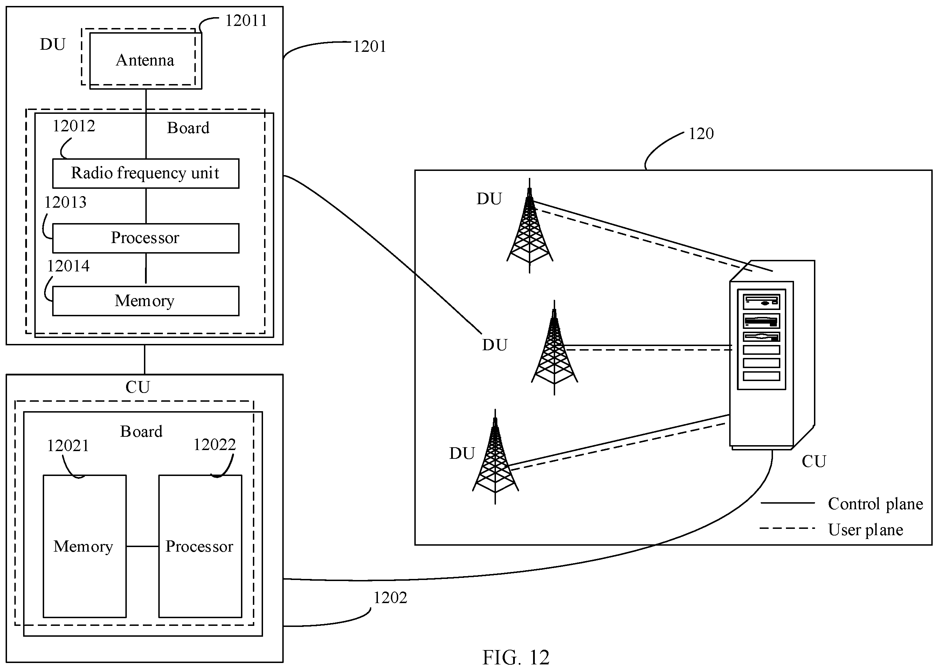

FIG. 12 is a diagram of a structure of a network device according to an embodiment of this application. The network device may be used in the communication system shown in FIG. 1, to perform functions of the network device in the foregoing method embodiments. As shown in FIG. 12, the network device 120 may be an access network device, and the network device 120 may include one or more DUs 1201 and one or more CUs 1202. The DU 1201 may include at least one antenna 12011, at least one radio frequency unit 12012, at least one processor 12013, and at least one memory 12014. The DU 1201 part is mainly configured to: receive and send radio frequency signals, perform conversion between a radio frequency signal and a baseband signal, and perform partial baseband processing. The CU 1202 may include at least one processor 12022 and at least one memory 12021.

The CU 1202 part is mainly configured to: perform baseband processing, control the network device, and the like. The DU 1201 and the CU 1202 may be physically disposed together, or may be physically disposed separately, that is, may be distributed base stations. The CU 1202 is a control center of the network device, may also be referred to as a processing unit, and is mainly configured to complete a baseband processing function. For example, the CU 1202 may be configured to control the network device to perform an operation procedure related to the network device in the foregoing method embodiments.

In addition, optionally, the network device 120 may include one or more radio frequency units, one or more DUs, and one or more CUs. The DU may include at least one processor 12013 and at least one memory 12014, the radio frequency unit may include at least one antenna 12011 and at least one radio frequency unit 12012, and the CU may include at least one processor 12022 and at least one memory 12021.

In an instance, the CU 1202 may include one or more boards. A plurality of boards may jointly support a radio access network of a single access standard (for example, a 5G network), or may separately support radio access networks of different access standards (for example, an LTE network, a 5G network, or another network). The memory 12021 and the processor 12022 may serve one or more boards. In other words, a memory and a processor may be disposed on each board. Alternatively, a plurality of boards may share a same memory and a same processor. In addition, a necessary circuit may be further disposed on each board. The DU 1201 may include one or more boards. A plurality of boards may jointly support a radio access network of a single access standard (for example, a 5G network), or may separately support radio access networks of different access standards (for example, an LTE network, a 5G network, or another network). The memory 12014 and the processor 12013 may serve one or more boards. In other words, a memory and a processor may be disposed on each board. Alternatively, a plurality of boards may share a same memory and a same processor. In addition, a necessary circuit may be further disposed on each board.

The network device shown in FIG. 12 can implement processes related to the network device in the foregoing method embodiments. Operations and/or functions of the modules in the network device shown in FIG. 12 are respectively used to implement corresponding procedures in the foregoing method embodiments. For details, refer to the descriptions in the foregoing method embodiments. To avoid repetition, detailed descriptions are properly omitted herein.

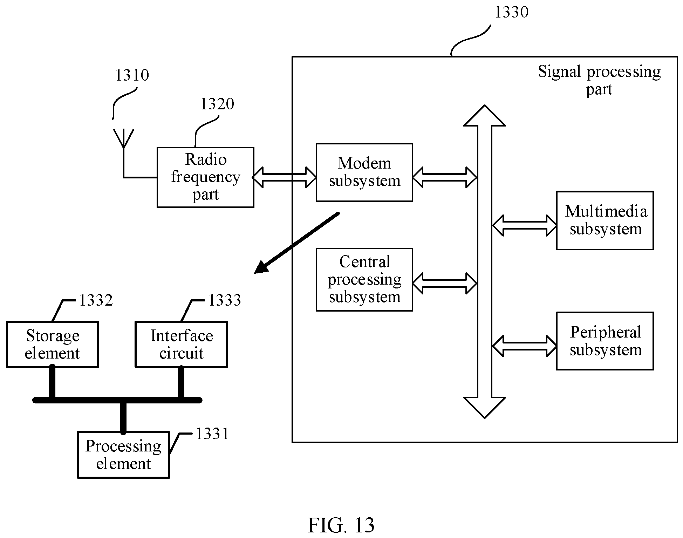

FIG. 13 is a diagram of a structure of a terminal according to an embodiment of this application. The terminal may be used in the communication system shown in FIG. 1, to implement operations of the terminal in the foregoing embodiments. As shown in FIG. 13, the terminal includes an antenna 1310, a radio frequency part 1320, and a signal processing part 1330. The antenna 1310 is connected to the radio frequency part 1320. In a downlink direction, the radio frequency part 1320 receives, via the antenna 1310, information sent by a network device, and sends, to the signal processing part 1330 for processing, the information sent by the network device. In an uplink direction, the signal processing part 1330 processes information about the terminal and sends processed information to the radio frequency part 1320, and the radio frequency part 1320 processes the information about the terminal and then sends processed information to the network device via the antenna 1310.

The signal processing part 1330 may include a modem subsystem, configured to process data at each communication protocol layer, and may further include a central processing subsystem, configured to implement processing at an operating system layer and an application layer of the terminal. In addition, the signal processing part 1330 may further include another subsystem, for example, a multimedia subsystem or a peripheral subsystem. The multimedia subsystem is configured to control a camera, a screen display, or the like of the terminal. The peripheral subsystem is configured to implement a connection to another device. The modem subsystem may be a separately disposed chip.

The modem subsystem may include one or more processing elements 1331, for example, a main control CPU and another integrated circuit. In addition, the modem subsystem may further include a storage element 1332 and an interface circuit 1333. The storage element 1332 is configured to store data and a program. However, a program used to perform the method performed by the terminal in the foregoing methods may not be stored in the storage element 1332, but is stored in a memory outside the modem subsystem, and is loaded and used by the modem subsystem when to be used. The interface circuit 1333 is configured to communicate with another subsystem.

The modem subsystem may be implemented by using a chip. The chip includes at least one processing element and an interface circuit. The processing element is configured to perform steps of any method performed by the terminal. The interface circuit is configured to communicate with another apparatus. In an implementation, units in the terminal for implementing the steps in the foregoing methods may be implemented in a form in which a processing element schedules a program. For example, the apparatus used in the terminal includes a processing element and a storage element. The processing element invokes a program stored in the storage element, to perform the method performed by the terminal in the foregoing method embodiments. The storage element may be a storage element located on a same chip as the processing element, that is, an on-chip storage element.

In another implementation, a program used to perform the method performed by the terminal in the foregoing methods may be in a storage element located on a different chip from the processing element, that is, an off-chip storage element. In this case, the processing element invokes or loads the program from the off-chip storage element to the on-chip storage element, to invoke and perform the method performed by the terminal in the foregoing method embodiments.

In still another implementation, units in the terminal for implementing the steps in the foregoing methods may be configured as one or more processing elements. These processing elements are disposed on the modem subsystem. The processing element herein may be an integrated circuit, for example, one or more ASICs, one or more DSPs, one or more FPGAs, or a combination of these types of integrated circuits. These integrated circuits may be integrated together to form a chip.

The units in the terminal for implementing the steps in the foregoing methods may be integrated together and implemented in a form of an SoC, and the SoC chip is configured to implement the foregoing methods. At least one processing element and a storage element may be integrated into the chip, and the processing element invokes a program stored in the storage element to implement the foregoing method performed by the terminal. Alternatively, at least one integrated circuit may be integrated into the chip, to implement the foregoing method performed by the terminal. Alternatively, with reference to the foregoing implementations, functions of some units may be implemented in a form in which the processing element invokes a program, and functions of some units may be implemented by the integrated circuit.

It can be learned that the foregoing apparatus used in the terminal may include at least one processing element and an interface circuit. The at least one processing element is configured to perform any method performed by the terminal in the foregoing method embodiments. The processing element may perform some or all steps performed by the terminal in a first manner, that is, by invoking a program stored in the storage element; or may perform some or all steps performed by the terminal in a second manner, that is, by combining instructions and a hardware integrated logic circuit in the processing element. Certainly, some or all steps performed by the terminal may alternatively be performed by combining the first manner and the second manner.

The processing element herein is the same as that described above, and may be implemented by using a processor. A function of the processing element may be the same as a function of the processing unit described in FIG. 11. For example, the processing element may be a general-purpose processor, for example, a CPU, or may be one or more integrated circuits configured to implement the foregoing method, for example, one or more ASICs, one or more microprocessors DSPs, one or more FPGAs, or a combination of at least two of the integrated circuit forms. The storage element may be implemented by using a memory, and a function of the storage element may be the same as a function of the storage unit described in FIG. 11. The storage element may be a memory, or may be a collective name of a plurality of memories.

The terminal shown in FIG. 13 can implement processes related to the terminal in the foregoing method embodiments. Operations and/or functions of modules in the terminal shown in FIG. 13 are respectively used to implement corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. The term "and/or" describes an association relationship of associated objects, and represents that three relationships may exist. For example, A and/or B may represent the following three cases: Only A exists, both A and B exist, and only B exists, where A and B may be singular or plural. The character "/" generally represents an "or" relationship between the associated objects. At least one of the following items (pieces) or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, but are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can guide the computer or the another programmable data processing device to operate in a specific manner, so that the instructions stored in the computer-readable memory generate an artifact that includes an instruction apparatus. The instruction apparatus implements a specific function in one or more procedure in the flowcharts and/or in one or more blocks in the block diagrams.

The computer program instructions may alternatively be loaded onto the computer or the another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. A communication method, wherein the method comprises:
receiving a first message, wherein the first message comprises first timing advance TA information of a first cell;
determining that the first TA information corresponds to a first timing advance group TAG among a plurality of TAGs, wherein the plurality of TAGs correspond to the first cell; and
sending a second message to a terminal, wherein the second message comprises identification information of a target cell for handover of the terminal, the first TA information, and identification information of the first TAG corresponding to the first TA information, and the target cell is the first cell.

2. The method according to claim 1, wherein the first message further comprises first information corresponding to the first TA information;
the method further comprises:
receiving a third message, wherein the third message indicates that the first TAG corresponds to the first information; and
determining that the first TA information corresponds to the first TAG among the plurality of TAGs comprises:
determining, based on the first message and the third message, that the first TA information corresponds to the first TAG.

3. The method according to claim 2, wherein determining, based on the first message and the third message, that the first TA information corresponds to the first TAG comprises:
determining, based on a correspondence between the first TA information and the first information and a correspondence between the first TAG and the first information, that the first TA information corresponds to the first TAG.

4. The method according to claim 2 or 3, wherein the first information indicates at least one of the following:
a first TRP, a first SSB, or a first random access resource, wherein
the first TRP corresponds to the first cell.

5. The method according to any one of claims 1 to 4, wherein the method further comprises:
sending first indication information, wherein the first indication information indicates that the terminal has obtained a TA corresponding to the first TAG.

6. The method according to any one of claims 1 to 5, wherein the first message further comprises second TA information of the first cell;
the method further comprises: determining that the second TA information corresponds to a second TAG in the plurality of TAGs; and
the second message further comprises the second TA information and identification information of the second TAG corresponding to the second TA information.

7. The method according to claim 6, wherein the method further comprises:
sending second indication information, wherein the second indication information indicates that the terminal has obtained a TA corresponding to the second TAG.

8. A communication method, wherein the method comprises:
receiving a second message, wherein the second message comprises identification information of a target cell for handover of a terminal, first TA information, and identification information of a first TAG, the first TAG is one of a plurality of TAGs, and the plurality of TAGs correspond to the target cell; and
determining, based on the second message, that the first TA information corresponds to the first TAG, and accessing the target cell by using a TA indicated by the first TA information.

9. The method according to claim 8, wherein the method further comprises:
when the second message is received, starting a timer corresponding to the first TAG, wherein uplink synchronization is implemented between the terminal and the target cell during running of the timer.

10. The method according to claim 8 or 9, wherein the method further comprises:
receiving downlink control information in the target cell, wherein the downlink control information indicates a resource, and the resource is an uplink resource or a downlink resource; and
when the downlink control information or the resource indicated by the downlink control corresponds to the first TAG, determining that the handover is completed.

11. The method according to any one of claims 8 to 10, wherein the method further comprises:
sending first indication information, wherein the first indication information indicates that the terminal has obtained the TA corresponding to the first TAG.

12. The method according to any one of claims 8 to 11, wherein the second message further comprises second TA information and identification information of a second TAG; and
the method further comprises: determining, based on the second message, that the second TA information corresponds to the second TAG.

13. The method according to claim 12, wherein the method further comprises:
sending second indication information, wherein the second indication information indicates that the terminal has obtained a TA corresponding to the second TAG.

14. A communication method, wherein the method comprises:
sending a third message, wherein the third message indicates that a first TAG among a plurality of TAGs corresponds to first information, and the plurality of TAGs correspond to a first cell;
sending a first message, wherein the first message comprises first TA information and the first information corresponding to the first TA information, and the first message and the third message are used to determine that the first TA information corresponds to the first TAG; and
determining that a terminal has obtained a TA corresponding to the first TAG.

15. The method according to claim 14, wherein the first information indicates at least one of the following:
a first TRP, a first SSB, and a first random access resource, wherein
the first TRP corresponds to the first cell.

16. The method according to claim 14 or 15, wherein the method further comprises:
receiving request information, wherein the request information is used to request random access configurations corresponding to the plurality of TAGs.

17. The method according to any one of claims 14 to 16, wherein determining that the terminal has obtained the TA corresponding to the first TAG comprises:
receiving first indication information, wherein the first indication information indicates that the terminal has obtained the TA corresponding to the first TAG.

18. The method according to any one of claims 14 to 17, wherein the third message further indicates that a second TAG in the plurality of TAGs corresponds to second information, the first message further comprises second TA information and the second information corresponding to the second TA information, and the first message and the third message are further used to determine that the second TA information corresponds to the second TAG; and
the method further comprises:
receiving second indication information, wherein the second indication information indicates that the terminal has obtained a TA corresponding to the second TAG.

19. A communication apparatus, comprising a module configured to perform the method according to any one of claims 1 to 18.

20. A communication apparatus, comprising a processor, wherein the processor is coupled to a memory, the memory stores a computer program, and the processor is configured to invoke the computer program in the memory, to enable the communication apparatus to perform the method according to any one of claims 1 to 18.

21. A communication system, wherein the communication system comprises a first network device, a second network device, and a terminal, the first network device is configured to perform the method according to any one of claims 1 to 7, the terminal is configured to perform the method according to any one of claims 8 to 13, and the second network device is configured to perform the method according to any one of claims 14 to 18.

22. A computer-readable storage medium, wherein the storage medium stores a computer program or instructions; and when the computer program or the instructions are executed by a computer, the method according to any one of claims 1 to 7, the method according to any one of claims 8 to 13, or the method according to any one of claims 14 to 18 is implemented.

23. A computer program product, wherein when a computer reads and executes the computer program product, the computer is enabled to perform the method according to any one of claims 1 to 7, the method according to any one of claims 8 to 13, or the method according to any one of claims 14 to 18.
